(19) Europäisches Patentamt
European Patent Office
Office européen des brevets

(11) **EP 2 892 142 B1**

(12) **EUROPEAN PATENT SPECIFICATION**

(45) Date of publication and mention
of the grant of the patent:
**20.05.2020 Bulletin 2020/21**

(51) Int Cl.:
*H02M 7/12* (2006.01)   *H02M 1/12* (2006.01)
*H02M 1/42* (2007.01)

(21) Application number: **13832894.3**

(22) Date of filing: **30.08.2013**

(86) International application number:
**PCT/JP2013/005143**

(87) International publication number:
**WO 2014/034138 (06.03.2014 Gazette 2014/10)**

(54) **RECTIFIER CIRCUIT DEVICE**

UMRICHTER-SCHALTVORRICHTUNG

DISPOSITIF DE CIRCUIT REDRESSEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.08.2012 JP 2012189483
05.02.2013 JP 2013020141
12.06.2013 JP 2013123495**

(43) Date of publication of application:
**08.07.2015 Bulletin 2015/28**

(73) Proprietor: **Panasonic Intellectual Property
Management Co., Ltd.
Osaka-shi, Osaka 540-6207 (JP)**

(72) Inventors:
• **DOYAMA, Yoshiaki
Osaka-shi,
Osaka 540-6207 (JP)**
• **KYOGOKU, Akihiro
Osaka-shi,
Osaka 540-6207 (JP)**

• **YOSHIDA, Izumi
Osaka-shi,
Osaka 540-6207 (JP)**
• **DAI, Xinhui
Osaka-shi,
Osaka 540-6207 (JP)**
• **KAWASAKI, Tomohiro
Osaka-shi,
Osaka 540-6207 (JP)**

(74) Representative: **Eisenführ Speiser
Patentanwälte Rechtsanwälte PartGmbB
Postfach 31 02 60
80102 München (DE)**

(56) References cited:
**WO-A1-2012/005006    JP-A- S63 224 698
JP-A- 2000 217 363    JP-A- 2001 145 358
JP-A- 2002 095 243    JP-A- 2006 174 689
JP-A- 2007 300 762    JP-A- 2011 024 394
JP-A- 2011 200 069    US-A1- 2011 228 573**

**Description**

**Technical Field**

The present invention is a rectifier circuit device applied to a device which rectifies a single phase AC power source such as the one in a standard home to produce a substantial DC to drive a DC load or a device which again converts the DC acquired as above into an AC at an arbitrary frequency using an inverter circuit to drive an electric motor at a variable speed, such as, for example, a device which constitutes a heat pump by compressing a coolant using a compressor and which executes air-conditioning such as cooling and heating, or refrigeration for food. Especially, for the rectifier circuit device, the present invention relates to reduction of a harmonic component included in a power source current, and driving control to reduce a load on a power transmission system by improving a power factor.

**Background Art**

This type of rectifier circuit device needs a reactor having very high inductance to reduce a harmonic current and the circuit becomes very large. A method is therefore employed of reducing power source harmonics by short-circuiting an AC power source through a reactor using a semiconductor switch to accumulate the current in the reactor, and opening the switch to transfer the accumulated current to the DC side.

Some methods have been proposed for the above method. A method is present as one of the methods, according to which one to several "short-circuit and opening" session(s) is/are executed for each power source cycle using a reactor having somewhat small inductance and a semiconductor switch (see, e.g., Patent Literature 1).

Fig. 26 is a circuit block diagram to realize the method disclosed in Patent Literature 1. When the semiconductor switch 103 is short-circuited during a time period for the absolute value of the voltage of an AC power source 101 to be low to accumulate a current in the reactor 102 and the semiconductor switch 103 is opened, the accumulated current flows to the DC side at a higher voltage. During a time period for the absolute value of the voltage of the AC power source to be high, the current of the reactor 102 can also be transferred to the DC side even when the short-circuiting is not especially executed. In this manner, the current from the AC power source 101 also flows during the time period for the power source voltage to be low and a power source current can be acquired that has a small harmonic component. This scheme has an advantage that the power source current does not especially need to be detected.

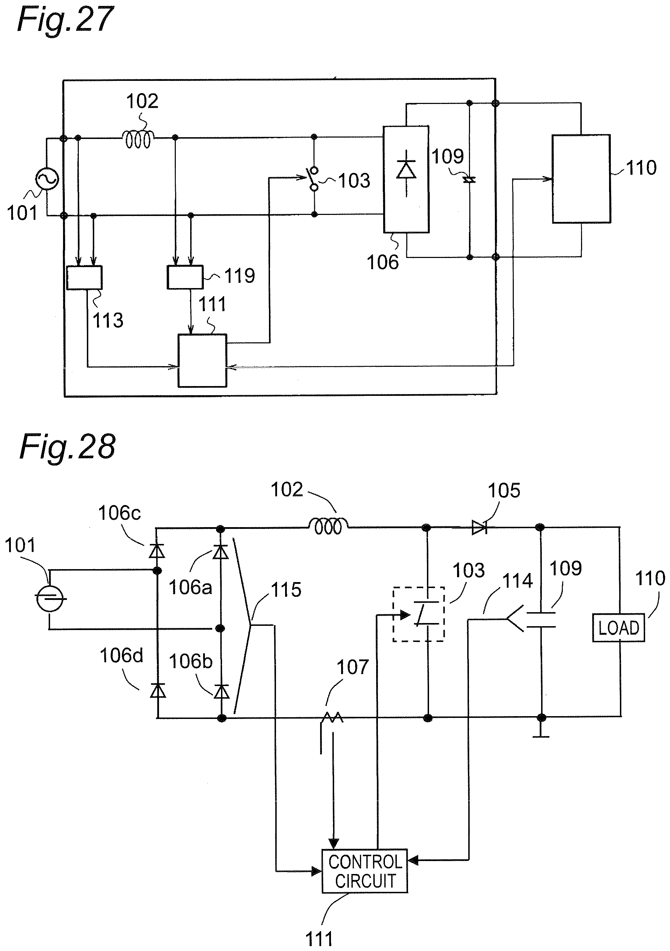

Similarly, as depicted in Fig. 27, this type of rectifier circuit device is configured to cause the AC power source 101 to be short-circuited using the semiconductor switch 103 through the reactor 102 to charge the current in the reactor 102, cause a current to flow through a load 110 using a diode bridge 106 when the semiconductor switch 103 is turned off, and, thereby, cause the power source current to flow also during a time period for an instantaneous voltage of the AC power source 101 to be low. Thereby, the harmonic component of the power source current is reduced and the power factor is improved.

In the case where the control of the short-circuiting and the turning off (the opening) of the semiconductor switch 103 is not properly executed, that is, in the case where the current is excessively accumulated in the reactor 102 or in the case where the timing for the accumulation is delayed, a problem arises that the current continues to flow even when the polarity of the AC power source 101 changes. When the current continues to flow through the reactor 102, the power source current becomes uncontrollable and the power factor is rather degraded.

To solve this, a method has been proposed according to which a terminal voltage of the reactor 102 is observed at a zero cross that is the instant for the polarity of the AC power source 101 to change, it is detected that a current flows through the reactor 102 based on whether the voltage is at a "High" level or a "Low" level, the short-circuiting of the semiconductor switch 103 is not started during a time period for the current to flow through the reactor 102 and immediately after this time period (see, e.g., Patent Literature 2).

Thereby, the state where the power source current is uncontrollable can be avoided and the power factor can be maintained.

Another method is present according to which a reactor having very low inductance and a semiconductor switch are used and the semiconductor switch is short-circuited and opened at a frequency that is much higher than the power source frequency (see, e.g., Patent Literature 3).

According to this method, the power source current or the value corresponding to this is detected and the ratios of the time periods for the short-circuiting and the opening of the semiconductor switch are corrected instant by instant to form a desired current waveform such as a sine wave waveform.

Fig. 28 is a circuit block diagram of a conventional rectifier circuit device described in Patent Literature 3. As depicted in Fig. 28, the AC power source 101 is rectified by diodes 106a, 106b, 106c, and 106d and, thereafter, the semiconductor switch 103 is short-circuited or opened though the reactor 102. The energy accumulated in the reactor 102 during the short-circuiting flows into a smoothing capacitor 109 through a diode 105. When the time period for the short-circuiting of the semiconductor switch 103 becomes long, an input current is increased and, when the time period for the short-circuiting becomes short, the input current is decreased. The current acquired after the input current is rectified by the diodes 106a, 106b, 106c, and 106d is detected by a current detecting means 107, and a control circuit 111 controls to acquire the same waveform as that detected by a voltage waveform detecting means 115. Thereby, the input current waveform substantially matches with the AC voltage waveform and a rectifying circuit having few harmonics is realized.

Rectifying circuits according to the preamble of claim 1 are also known from Patent Literature 5 and 6. Patent Literature 7 discloses a power converter connected to a commercial power supply which may be connected to a number of power converters. Patent Literature 8 discloses a power source reconverting an AC power to a pseudo-sine wave of a desired frequency after converting the power to a DC power.

**Citation List**

**Patent Literature**

PLT 1: JP 2000-217363 A
PLT 2: JP2007-300762 A
PLT 3: JP S63-224698 A
PLT 4: JP2011-200069 A
PLT 5: JP2002-95243 A
PLT 6: US 2011/0228573 A1
PLT 7: JP2011-24394 A
PLT 8: JP2001-145358 A

**Summary of Invention**

**Technical Problem**

With the conventional scheme described in Patent Literature 1, however, the proper pattern for the short-circuiting and the opening differs depending on the load, and the state of the load therefore needs to be known and a proper pattern for the short-circuiting and the opening therefore needs to be prepared for each state of the load. In avoiding any increase of types of the pattern, another problem arises that the inductance value of the reactor cannot be reduced.

With the conventional configuration in Patent Literature 2, once the current continues to flow through the reactor, an operation is executed to delay the starting time of the short-circuiting and the electric power in the first half of a half cycle time period of the AC power source therefore becomes unusable and, to establish the balance with the load, more electric power in the second half of the half cycle time period needs to be used. As a result, the power factor is somewhat degraded and the power source harmonics are somewhat increased. To reduce the influence of this, a reactor having a high inductance value is employed to make room and a problem arises that downsizing of the circuit is difficult.

With the scheme described in Patent Literature 3, the power source current needs to be detected instant by instant at a high speed and with high precision.

A method has been proposed as a method to improve these situations, according to which a peak phase of the power source current is detected and the pattern for the short-circuiting and the opening is switched to match with the peak phase of the voltage (see, e.g., Patent Literature 4).

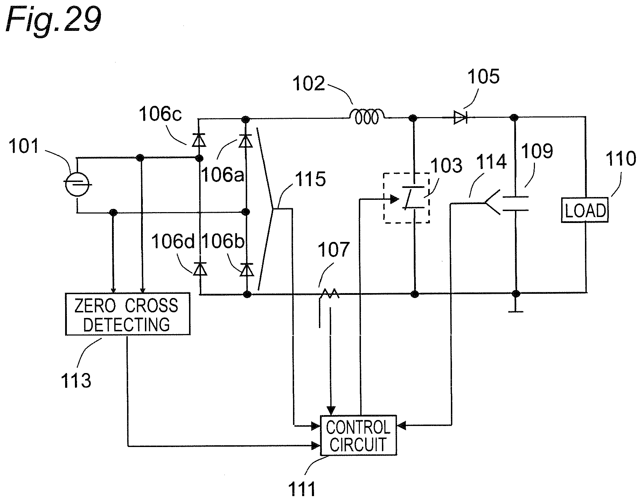

Fig. 29 is a circuit block diagram of a configuration to execute a method of switching the patterns for the short-circuiting and the opening. A zero cross detecting means 113 detects the phase of the AC power source 101. Using the detected phase as a reference phase, the pattern to short-circuit or open the semiconductor switch 103 is generated. The voltage detecting means 115 detects the peak phase of the AC voltage. The current detecting means 107 detects the peak phase of the input current. When the peak phase of the input current is different from the peak phase of the AC voltage, the pattern to short-circuit and open the semiconductor switch 103 is switched to another pattern. The controlling in this manner properly maintains the phase of the current even when the peak phase of the current is shifted due to dispersion of parts, etc.

Even when the method of Patent Literature 4 is used, the state of the load needs to be known and the proper short-circuiting and opening pattern needs to be prepared for each state of the load because the proper pattern for the short-circuiting and the opening differs depending on the load. In the method of Patent Literature 4, however, these items are scarcely improved and no method is disclosed for easy realization. To detect the peak of the current phase, a configuration is essential that is capable of detecting the current instant by instant.

Even when the proper patterns for the short-circuiting and the opening can be prepared and the phase of the current can be matched with the AC power source phase, reduction is also necessary of the power source harmonics generated by the dispersion of the parts, etc.

The present invention solves the problems in the conventional devices and an object thereof is to provide a rectifier circuit device capable of reducing harmonic currents without meticulously detecting the current instant by instant even when the load or a part constant significantly vary. The present invention is also applicable to the case where any downsizing of the reactor is relatively not especially necessary, and provides a simpler rectifier circuit device.

**Solution to Problem**

To solve the problems in the conventional devices, the rectifier circuit device of the present invention includes a control circuit that executes the short-circuiting and the opening of the semiconductor switch according to a pattern based on a phase of a voltage of the AC power source and a DC voltage detecting circuit of the output of the rectifier circuit, and the control circuit adjusts the phase relation between the short-circuiting and opening pattern of the semiconductor switch and the AC power source voltage such that the average level of the DC voltage in at least an AC power source voltage half cycle is substantially equal to the level of the DC voltage at a time of an instantaneous voltage peak phase of the AC power source voltage.

To solve the problems in the conventional devices, the rectifier circuit device of the present disclosure includes a control circuit that executes the short-circuiting and the opening of the semiconductor switch according to a pattern based on the phase of the AC voltage, and a means of detecting electric power flowing into the DC side, and the control circuit is configured to adjust the phase of the short-circuiting and opening pattern of the semiconductor switch such that the detected amounts of the electric power information of the first half and the second half of each half cycle of the AC power source are equal to each other.

Thereby, the current becomes symmetrical and has the same phase as that of the power source voltage even when no precision is secured for the reactor inductance or even when the load significantly varies, and a high power factor rectifier circuit device can therefore be established.

The DC voltage is detected, and the ratio of the short-circuiting time period in the pattern is adjusted based on the difference between the detected DC voltage and the desired voltage. Thereby, an arbitrary DC voltage can be output maintaining a high power factor.

An electric power amount or a current amount of the middle portion is detected in addition to the first half amount and the second half amount of the electric power or the current flowing into the DC side, and the ratio is adjusted of the short-circuiting time period in the short-circuiting and opening pattern of the DC semiconductor switch such that each amount is in a desired range or the state of the pulsing motion of the DC voltage becomes a predetermined state. Thereby, a rectifying circuit operation is realized with a high power factor and few harmonics.

To solve the further problem that the configuration of the control system is desired to be simplified rather than downsizing of the reactor using a simple apparatus, the rectifier circuit device of the disclosure is further configured to execute the short-circuiting and the opening of the semiconductor switch in the pattern based on the phase of the AC voltage, have a means disposed therein of detecting the presence or the absence of the current of the reactor during a time period for the semiconductor switch to be turned off in the time period in the vicinity of the instant at which the instantaneous voltage of the AC power source is zero, and adjust the phase of the short-circuiting and opening pattern of the semiconductor switch relative to the phase of the AC power source voltage based on the result of the detection for the presence or the absence of the current of the reactor.

Thereby, for example, the semiconductor switch is opened in the time period in the vicinity of the instant at which the instantaneous voltage of the AC power source is zero and the reactor current during the opening time period is detected. When the reactor current is not zero, the pattern is corrected such that the pattern precedes the phase of the AC voltage. Any accumulation of the current in the reactor is therefore avoided and the phase of the current is same as that of the power source voltage even when no precision is secured for the reactor inductance or even when the load significantly varies. A high power factor rectifier circuit device is therefore established.

**Advantageous Effects of Invention**

According to the present invention, a rectifier circuit device can be realized capable of outputting an arbitrary DC voltage and having a high power factor and few power source harmonics even when no precision is secured for the reactor inductance or even when the load significantly varies, without especially using any high speed and high precision current detecting means.

According to the present invention, a rectifier circuit device can be realized that is capable of preventing any increase of harmonics together with the influence of a load varying due to the influence caused by the property of the turning on or off of the semiconductor switch and that has few power source harmonics of an arbitrary DC voltage output.

**Brief Description of Drawings**

Fig. 1 is a circuit block diagram in a first embodiment according to the present invention.
Fig. 2 is waveform diagrams showing an operation principle in the first embodiment according to the present invention.
Fig. 3 is a circuit block diagram in a second embodiment according to the present invention.
Fig. 4 is waveform diagrams showing an operation principle in the second embodiment according to the present invention.
Fig. 5 is a circuit block diagram in a third embodiment according to the present invention.
Fig. 6 is waveform diagrams showing an operation principle in the third embodiment according to the present invention.
Fig. 7 is a waveform diagram showing the operation principle of an output voltage control in the first to third embodiments according to the present invention.
Fig. 8 is a circuit block diagram in fourth and fifth embodiments with a difference operation principle from the first and second embodiments according to the present invention.
Fig. 9 is a circuit block diagram in sixth and seventh embodiments with a further difference operation principle from the first and second embodiments according to the present invention.
Fig. 10 is a circuit block diagram in an eighth embodiment with a further difference operation principle from the third embodiment according to the present invention.
Fig. 11 is a circuit block diagram in a ninth embodiment with a further difference operation principle from the third embodiment according to the present invention.
Fig. 12 is a circuit block diagram in a tenth embodiment with a further difference operation principle from the third embodiment according to the present invention.
Fig. 13 is a circuit diagram of a rectifier circuit device in an eleventh embodiment according to the present invention.
Fig. 14 (a), (b) are waveform diagrams showing an operation principle for adjusting a phase in the eleventh embodiment according to the present invention.
Fig. 15 is a waveform diagram showing an operation for adjusting a voltage in the eleventh embodiment according to the present invention.
Fig. 16 (a), (b) are waveform diagrams showing an operation principle in a twelfth embodiment according to the present invention.
Fig. 17 is a circuit block diagram in a thirteenth embodiment according to the present invention.
Fig. 18 is a circuit block diagram in a fourteenth embodiment according to the present invention.
Fig. 19 is a circuit diagram showing an operation principle for reducing a harmonic component in a fifteenth embodiment according to the present invention.
Fig. 20 is a waveform diagram showing a method of readjustment in the fifteenth embodiment according to the present invention.
Fig. 21 is a waveform diagram showing another method of readjustment in the fifteenth embodiment according to the present invention.
Fig. 22 is waveform diagrams showing an operation for reducing a harmonic component in a sixteenth embodiment according to the present invention.
Fig. 23 is waveform diagrams showing an operation for reducing a harmonic component in a seventeenth embodiment according to the present invention.
Fig. 24 is waveform diagrams showing an operation for reducing a harmonic component in an eighteenth embodiment according to the present invention.
Fig. 25 is a circuit block diagram of a rectifier circuit device in a nineteenth embodiment according to the present invention.
Fig. 26 is the circuit block diagram showing the conventional example.
Fig. 27 is the circuit block diagram showing the difference conventional example.
Fig. 28 is the circuit block diagram showing the further difference conventional example.
Fig. 29 is the circuit block diagram showing the further difference conventional example.

**Description of Embodiments**

A first aspect according to the present disclosure is a rectifier circuit device having a function of improving a power source power factor by short-circuiting and opening an AC power source through a reactor using a semiconductor switch, wherein the rectifier circuit device comprises
a control circuit which executes the short-circuiting and the opening of the semiconductor switch according to a pattern based on a phase of a voltage of the AC power source; and

a circuit which detects electric power flowing into a direct current side, wherein

the control circuit adjusts a phase relation between a short-circuiting and opening pattern of the semiconductor switch and the AC power source voltage such that a detected electric power amount of a first half and that of a second half of each half cycle of the AC power source are substantially equal to each other.

Thereby, the input current becomes symmetrical and has the same phase as that of the power source voltage, and a rectifier circuit device can therefore be realized that has few harmonics and a high power factor even when no precision is secured for the reactor inductance or even when the load significantly varies, without using any high speed and high precision current detecting means.

A first aspect according to the present invention includes a DC voltage detecting circuit instead of the circuit detecting the electric power flowing into the DC side in the first aspect according to the present disclosure, wherein the control circuit adjusts the phase relation between the short-circuiting and opening pattern of the semiconductor switch and the AC power source such that the average level of the DC voltage in at least a half cycle time period of the power source voltage is substantially equal to the level of the DC voltage at a time of an instantaneous voltage peak phase of the AC power source voltage.

Thereby, the input current becomes symmetrical and has the same phase as that of the power source voltage, and a rectifier circuit device can therefore be realized that has few harmonics and a high power factor even when no precision is secured for the reactor inductance or even when the load significantly varies, without disposing any detecting means for a current or electric power.

In an embodiment according to the present invention the DC voltage is detected and the ratios of the short-circuiting time period for the short-circuiting and the opening of the short-circuiting and opening pattern of the semiconductor switch is adjusted such that the detected DC voltage approaches a desired DC voltage.

When the ratio is increased of the time period for the short-circuiting of the short-circuiting and opening pattern, the current accumulated in the reactor is increased and the current flowing into the DC side during the opening is also increased, and the DC output voltage can therefore be increased. Thereby, the DC voltage can be adjusted using only one type of short-circuiting and opening pattern of the semiconductor switch without detecting the current instant by instant and executing control instant by instant.

A further embodiment according to the present invention refers to an electric angle of the AC power source as "0", the ratio "D" of the short-circuiting time period of the short-circuiting and opening pattern of the semiconductor switch in the vicinity of "$\theta$" is substantially expressed in Eq. (2) below,

[Eq. 2]

$$D = 1 - A \times \sin(\theta - \beta) \quad (2)$$

"$\beta$" in Eq. (2) is adjusted corresponding to a difference between the DC voltage at the time of the peak phase of the instantaneous voltage of the AC voltage and the average DC voltage of at least a half cycle of the power source, and "A" in Eq. (2) is adjusted corresponding to a difference between the DC voltage and a desired DC voltage.

In a further embodiment according to the present invention a DC voltage is detected instant by instant for the short-circuiting and opening pattern of the semiconductor switch set and re-adjusts the ratio "D" of the short-circuiting time period of the short-circuiting and opening pattern of the semiconductor switch based on the deviation between the detected voltage "Vdc" of the DC voltage detected instant by instant and a desired DC voltage "Vdc*".

In a further embodiment according to the present invention the rectifier circuit is a rectifier circuit device for which, referring to an electric angle of the AC power source as "0", the ratio "D" of the short-circuiting time period of the short-circuiting and opening pattern of the semiconductor switch in the vicinity of "$\theta$" is substantially expressed in Eq. (4) below,

[Eq. 4]

$$D = 1 - A \times \sin(\theta - \beta) \quad (4)$$

"A" value of "A1" in Eq. (5) below or "A2" in Eq. (6) below is used instead of "A" in Eq. (4).

[Eq. 5]

$$A1 = A / \{1 - (Vdc^* - Vdc) / Vdc^*\} \quad (5)$$

[Eq. 6]

$$A2=A\times\{(Vdc^*-Vdc)/Vdc^*\} \quad (6)$$

Even when the output of the single phase rectifying circuit is smoothed, the output cannot be a complete direct current and a ripple voltage remains instant by instant therein. Due to this remaining ripple voltage, an instantaneous average value of the short-circuiting and opening pattern of the semiconductor switch acquired when the ratio "D" of the short-circuiting time period once calculated is used, is not a sine wave voltage while using "A1" or "A2" removes the influence of the remaining ripple voltage and the instantaneous average value of the short-circuiting and opening pattern of the semiconductor switch becomes a sine wave, and more highly precise sine wave current is realized.

In a further embodiment according to the present invention, the control circuit adjusts the short-circuiting and the opening pattern of the semiconductor switch such that the DC voltage waveform of the first half or the second half of at least a half cycle section of the AC power source is symmetrical. Especially, the ratio of the short-circuiting time period of the short-circuiting and opening pattern of the semiconductor switch is adjusted such that the DC voltage detected instant by instant is symmetric before and after an axis that is 45 degrees or 135 degrees in a half cycle section of the AC power source.

Thereby, a rectifier circuit device can be realized that has few harmonics and a high power factor even when no precision is secured for the reactor inductance or even when the load significantly varies, without using any high speed and high precision current detecting means with an input current that is symmetrical and that maintains the same phase as that of the power source voltage.

Embodiments according to the rectifier circuit device of the present invention will be described with reference to the accompanying drawings. The present invention is not limited by the configurations of the rectifier circuit devices described in the embodiments below, and includes any rectifier circuit device as defined by the appended claims.

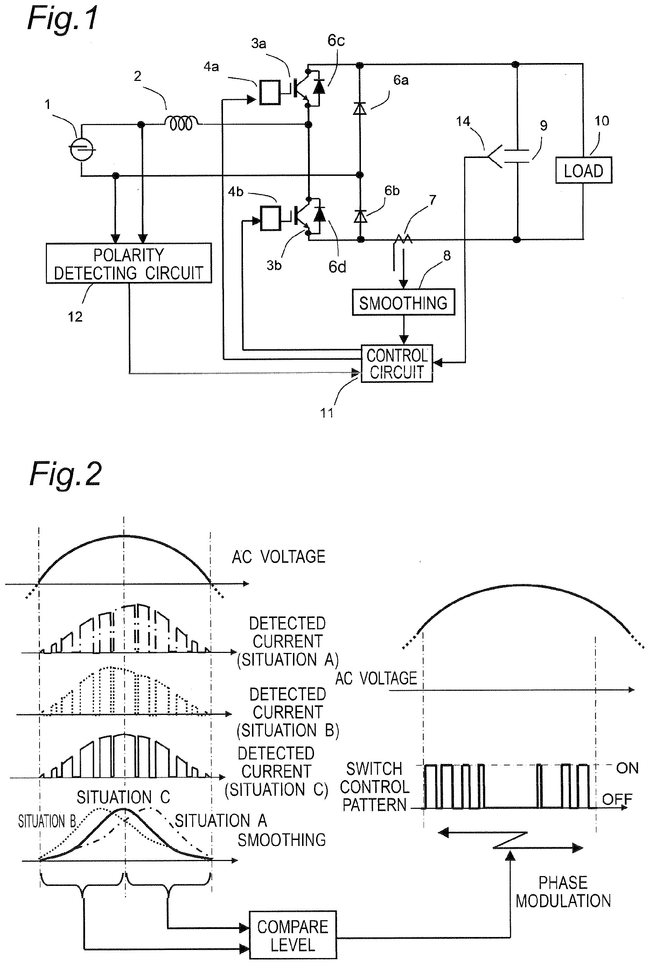

Fig. 1 is a circuit block diagram of a rectifier circuit device in the first example according to the present disclosure.

One of outputs of an AC power source 1 is connected to a common connection part of semiconductor switches 3a and 3b though a reactor 2. The semiconductor switches 3a and 3b are respectively connected to diodes 6c and 6d each in parallel thereto. The other output of the AC power source 1 is connected to a common connection part of the diodes 6a and 6b. The remaining ends of the semiconductor switch 3a and the diode 6a and the remaining ends of the semiconductor switch 3b and the diode 6b are commonly connected to be connected to a smoothing capacitor 9. The smoothing capacitor 9 is connected to a load 10.

The AC power source 1 includes a polarity detecting circuit 12 and the polarity detecting circuit 12 sends to a control circuit 11 polarity information indicating at which terminal the potential is higher. The polarity information is used in controlling which semiconductor switch of the two semiconductor switches 3a and 3b is short-circuited or opened (ON/OFF control).

The control circuit 11 sends a driving control signal to semiconductor switch driving circuits 4a and 4b using the polarity information on the AC power source 1 and electric power information acquired by detecting a current flowing into the smoothing capacitor 9 using a current detecting circuit 7 and transferred through a smoothing circuit 8, and executes the control for short-circuiting or opening either the semiconductor switch 3a or 3b. For example, during a time period for the voltage on the reactor 2 connection side of the AC power source 1 to be high, by short-circuiting or opening the semiconductor switch 3b, the current is accumulated in the reactor 2 during the short-circuiting and, during the opening, the current accumulated in the reactor 2 is sent to the smoothing capacitor 9 through the diode 6c. Thereby, even when the instantaneous voltage of the AC voltage is low, the electric power can be sent from the AC power source 1 to the smoothing capacitor 9. As a result, a rectifier circuit device having few harmonics can be realized. A method of using a DC voltage detecting circuit 14 will be described later.

Fig. 2 is waveform diagrams for explaining the operation principle of the control circuit 11. In Fig. 2, a waveform of the AC voltage (the AC voltage) is depicted in the upper row in the right portion therein, and a pattern (a switch control pattern) of the short-circuiting (=ON) and the opening (=OFF) of the semiconductor switch is depicted thereunder.

When the semiconductor switch is driven according to this pattern, the current detected by the current detecting circuit 7 of Fig. 1 behaves as depicted in a situation A, a situation B, and a situation C in the middle row on the left in Fig. 2. When the semiconductor switch is short-circuited, the current is zero and, when the semiconductor switch is opened, the current flows into the smoothing capacitor 9.

The waveforms each smoothed by the smoothing circuit 8 and converted into the electric power information are waveforms in the lower left in Fig. 2 and correspond to the situation A (a dashed and dotted line waveform), the situation B (a dotted line waveform), and the situation C (a solid line waveform).

The sizes of the first half and the second half of this waveform are compared with each other using a level comparing circuit, and the phase relation of the pattern in the lower right is corrected corresponding to the level difference.

For example, when the electric power of the first half is higher as in the situation B (the dotted waveform), the overall phase of the short-circuiting and opening pattern of the semiconductor switch is advanced. By executing this process, the amount of the electric power in the first half and that in the second half become same and the amount of current in the first half and that in the second half also become same as a result. According to the configuration of the first example, the peak of the current matches with the peak of the instantaneous voltage of the AC and a high power factor rectifier circuit device can therefore be realized.

As to the short-circuiting and opening pattern of the semiconductor switch of Fig. 2, a pattern having the short-circuiting scarcely executed therein is set for the time period having a great absolute value of the instantaneous value of the AC voltage. According this pattern, the input current is gradually increased as the absolute value of the instantaneous value of the voltage (the instantaneous voltage) is increased and the input current is gradually reduced when the absolute value of the instantaneous voltage is reduced, based on the fact that the current is increased as the absolute value of the instantaneous value of the AC voltage is increased and the property that the increase amount of the current becomes larger when the ratio of the short-circuiting time period is increased. Setting this short-circuiting and opening pattern causes the input current to smoothly vary and a rectifier circuit device can therefore be realized that has few harmonics.

As above, according to the rectifier circuit device of the first example, by a simple process of adjusting the phase of the switch control pattern such that the pieces of electric power information on the first half and the second half of a half cycle of the AC power source are equal to each other, a rectifier circuit device can be realized that needs no precision for the inductance of the reactor, that can cope with any load variation, and that has few harmonics. Especially, the electric power detection only has to be executed to the extent that the variation can be known for each 1/4 cycle of the power source and not instant by instant, and inexpensive parts are usable. For the circuit configuration depicted in Fig. 1, a high current flows when the two semiconductor switches 3a and 3b are simultaneously short-circuited, and the semiconductor switches may be damaged depending on the type thereof. To prevent this simultaneous short-circuiting, a current detecting means to detect the simultaneous short-circuiting may be disposed at a point depicted in Fig. 1. For this configuration, the current detecting means for detecting the simultaneous short-circuiting can also be used as the current detecting circuit 7 and the realization is further facilitated.

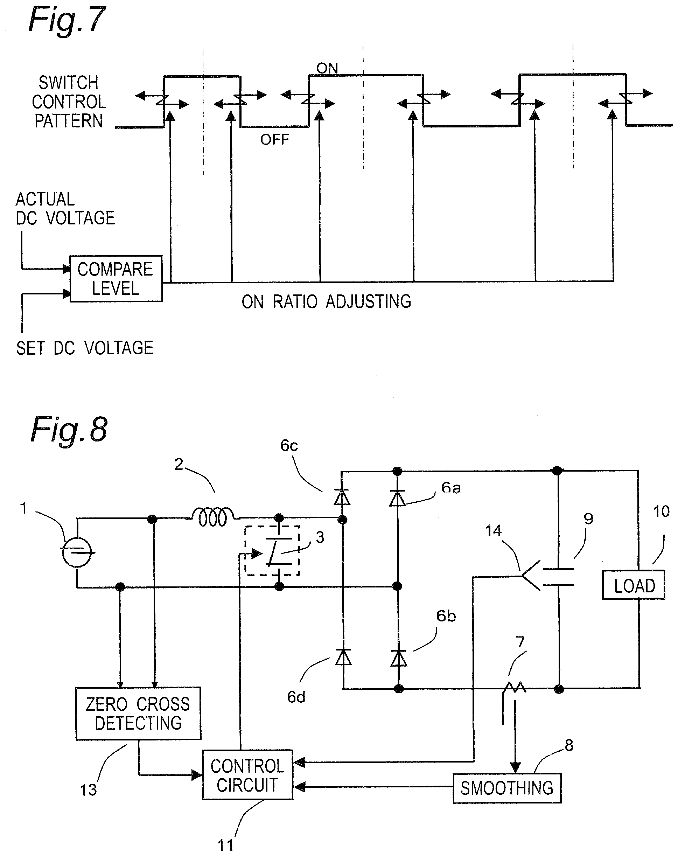

Fig. 7 is a waveform diagram of a control method to maintain the DC voltage to be constant.

The DC voltage detected by the DC voltage detecting circuit 14 (the actual DC voltage) is compared as to the level with a desired voltage value (the set DC voltage), and the ratio of the short-circuiting time period (an ON ratio) of the switch control pattern is adjusted corresponding to the result of the comparison. When the short-circuiting time period is increased, the energy accumulated in the reactor 2 is increased and the energy flowing into the smoothing capacitor 9 during the opening is increased to enable the output voltage to be increased. Using this principle, the DC voltage can be adjusted to have the desired voltage value.

The adjustment amount of the ratio of the short-circuiting time period is set such that the adjustment amount of the ratio of the short-circuiting time period is substantially increased when the absolute value of the instantaneous voltage tends to be increased and the adjustment amount of the ratio of the short-circuiting time period is substantially reduced when the absolute value of the instantaneous voltage tends to be reduced. When the harmonics are few and the power factor is high, the power source voltage waveform and the current waveform resemble each other. When the DC voltage is varied, the amplitude only has to be increased or reduced maintaining the waveform of the input current, and this is a time period for the ratio of the short-circuiting time period to be small. The variation of the current is more significant in a phase time period for the absolute value of the instantaneous voltage to be higher. According to the rectifier circuit device of the first example, therefore, the DC voltage can be adjusted using a current waveform having few harmonics and only one type of short-circuiting and opening pattern of the semiconductor switch without detecting the current instant by instant and executing control instant by instant, by increasing the adjustment amount in the time period for the absolute value of the instantaneous voltage of the AC power source 1 to be high.

Assuming that the power source waveform is a sine wave, the condition of the present disclosure can be satisfied when the short-circuiting and the opening ratios at the electric angle of $\theta$, that is, the ratio "D" of the short-circuiting time period is set to be that in Eq. (7) below as an example as the switch control pattern to realize Fig. 2 and Fig. 7.
[Eq. 7]

$$\text{Short-circuiting and opening ratio} \quad D=1-A\times\sin(\theta-\beta) \quad (7)$$

In Eq. (7), "A" is a value that is adjusted based on the difference between the DC voltage and a desired value, and "$\beta$" is a value that is adjusted based on the difference in the electric power between the first half and the second half of each half cycle. Because "D" in the left member is a ratio, "D" is set to be one when the value of the right member exceeds one and is set to be zero when the value of the right member is smaller than one.

In Eq. (7), the pattern to be set is based on only one sine wave pattern. During a time period for the absolute value of the instantaneous voltage of the AC power source 1 to be low, the ratio "D" of the short-circuiting time period is relatively great and, as to the adjustment amount corresponding to the voltage difference, the adjustment amount is large during a time period for the absolute value of the instantaneous voltage of the AC power source 1 to be great.

For handling the electric power amounts of the first half and the second half of each half cycle, using an electric angle of 90 degrees as an axis, detected values at phases symmetrical before and after the axis are usable as representative values, as a method of easily executing the handling. For example, values at 40 degrees and 140 degrees to have phases of each 50 degrees before and after the axis are used as the representative values. In this configuration, detected value at a time point (for example, 40 degrees) a specific time period (T: for example, 50 degrees) before the time at which the instantaneous value of the AC voltage is maximal (the electric angle of 90 degrees) and a detected value at a time point (for example, 140 degrees) after the same specific time period (T) elapses from the time at which the instantaneous value of the AC voltage is maximal are used as the detected amounts of the electric power of the first half and the second half of each half cycle of the AC power source 1.

The variation direction of the increase or the reduction of the absolute value of the instantaneous voltage in each phase of the AC power source 1 and the variation direction of the increase or the reduction of the ratio "D" of the short-circuiting time period are set to be opposite to each other, and the adjustment amount corresponding to the difference in the DC voltage is set to have the magnitude having a direction substantially opposite to the variation direction of the magnitude of the ratio "D" of the short-circuiting time period, as the conditions for the pattern. The pattern is listed above that can be expressed using the equation as an example of the pattern while an infinite number of patterns are present that each have the same property and that each reduce the harmonics. The pattern is therefore not limited to that of Eq. (7).

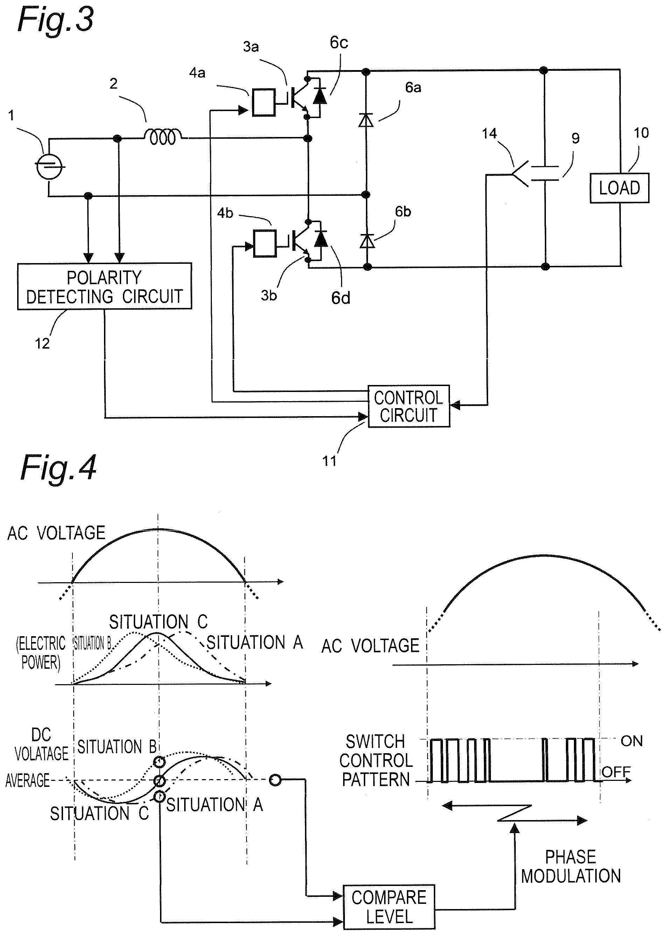

Fig. 3 is a circuit block diagram of a rectifier circuit device of the first embodiment according to the present invention. The circuit configuration of Fig. 3 is substantially same as that of Fig. 1 while this configuration provides a method capable of being implemented without using the current detecting circuit 7.

The control circuit 11 receives the output of the polarity detecting circuit 12 (the polarity information) and the output of the DC voltage detecting circuit 14 (the DC voltage information). The method of using the polarity detecting circuit 12 is same as that in the first example.

Fig. 4 is waveform diagrams for explaining a method of controlling using the information of the DC voltage detecting circuit 14. Similarly to the description made with reference to Fig. 2, the peak of the electric power flowing in the smoothing capacitor 9 needs to be matched with the peak of the instantaneous voltage of the AC power source 1. In this case, the output of the smoothing capacitor 9 includes a ripple like the situation C (the solid line waveform) of the waveforms in the lower left in Fig. 4. The DC voltage is reduced in the first half of the half cycle and the DC voltage is increased in the second half. The phase of the voltage peak of the AC power source 1 is the center of the variation and the voltage is equal to the average DC voltage. When the peak of the electric power is shifted, however, the DC voltage in the phase of the voltage peak of the AC power source 1 is shifted from the average value. For example, when the phase in the electric power peak portion is advanced as in the situation B (the dotted line waveform), the DC voltage is increased in the voltage peak phase of the AC power source 1. In the opposite case, that is, in the situation A (the dashed and dotted line waveform), the DC voltage is reduced in the same phase. The levels are compared between the average DC voltage and the DC potential in the voltage peak phase of the AC power source 1 and the phase relation is adjusted between the AC power source phase and the short-circuiting and opening pattern of the semiconductor switch. Thereby, the peak phase of the AC current matches with the peak of the instantaneous voltage of the AC power source 1, and a high power factor rectifier circuit device can be realized. Because no current detecting means is necessary, this configuration can more easily be realized compared to the configuration of the first example. The detailed short-circuiting and opening pattern is same as that of the first example.

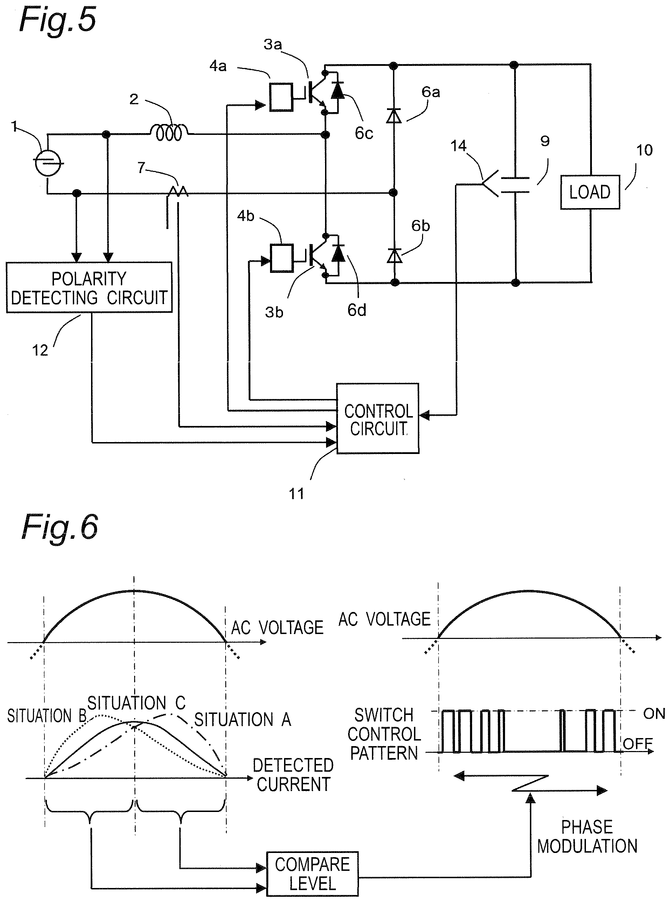

Fig. 5 is a circuit block diagram of a rectifier circuit device of a second example according to the present disclosure. The circuit configuration of Fig. 5 is substantially same as that of Fig. 1 while the current detecting circuit 7 is disposed at a position enabling direct detection of the current from the AC power source 1.

The control circuit 11 is input with the output of the polarity detecting circuit 12 (the polarity information) and the output of the current detecting circuit 7 (the current information). The method of using the polarity detecting circuit 12 is same as that in the first example of the present disclosure.

Fig. 6 is waveform diagrams for explaining the method of executing the control using detected current information of the current detecting circuit 7 on the AC side. In this case, the peak phase of the AC current needs to be matched with the peak phase of the instantaneous voltage of the AC power source 1. Similarly to Fig. 2, when the current amounts (pieces of current information) of the first half and the second half of the half cycle are equal to each other, the peaks match with each other. The levels are therefore compared between the current amounts (the pieces of current information) of the first half and the second half of the half cycle, and the overall phase of the short-circuiting and opening pattern of the semiconductor switch is adjusted. Thereby, the peak of the current matches with the peak of the instantaneous voltage of the AC, and a high power factor rectifier circuit device can be realized.

In cooling, heating, and refrigeration to be the fields to use the present invention, a current detecting means is often included on the AC side to control the operation to avoid excessive power source current and, in the configuration of the rectifier circuit device of the second example, the current detecting means is also usable as the current detecting circuit and the rectifier circuit device can be further easily realized.

The detailed short-circuiting and opening pattern is same as that of the first example. The use of the electric angle of 90 degrees as the axis and the use of the detected values in the phases that are symmetrical before and after the axis as the representative values, that is described in the first example, are also enabled as the simple method of detecting the current amount of the first half and the second half of each half cycle of the AC power source 1. With this configuration, a detected value at a time point (for example, 40 degrees) a specific time period (T: for example, 50 degrees) before a time (the electric angle of 90 degrees) at which the instantaneous value of the AC voltage is maximal and a detected value at a time point (for example, 140 degrees) after the same specific time period (T) elapses from the time at which the instantaneous value of the AC voltage is maximal, are used as the detected values of the current of the first half and the second half of each half cycle of the AC power source 1.

Fig. 8 is a circuit block diagram of the case where the rectifier circuit device of the third example according to the present disclosure is implemented using another circuit configuration. The basic circuit configuration of the rectifier circuit device of the third example is same as that described in Patent Literature 1. According to the configuration, the AC power source 1 is short-circuited by the semiconductor switch 3 through the reactor 2 and the energy accumulated in the reactor 2 is sent to the smoothing capacitor 9 through the diodes 6a, 6b, 6c, and 6d. In this configuration, different from the first example, because the semiconductor switch 3 is one, the polarity of the AC power source 1 does not need to be known and the zero cross information by the zero cross detecting circuit 13 only has to be used. The control method used by the control circuit 11 is same as that of the first example and will not again be described.

A rectifier circuit device of the fourth example according to the present disclosure will be described. In the configuration depicted in Fig. 8, the current detecting circuit 7 and the smoothing circuit 8 are omitted and the information by the DC voltage detecting circuit 14 is used. Thereby, the control same as that of the first embodiment can be realized. Different from the first embodiment, the polarity of the AC power source 1 does not need to be known and the zero cross information by the zero cross detecting circuit 13 only has to be used. The control method used by the control circuit 11 is same as that of the first embodiment and will not again be described.

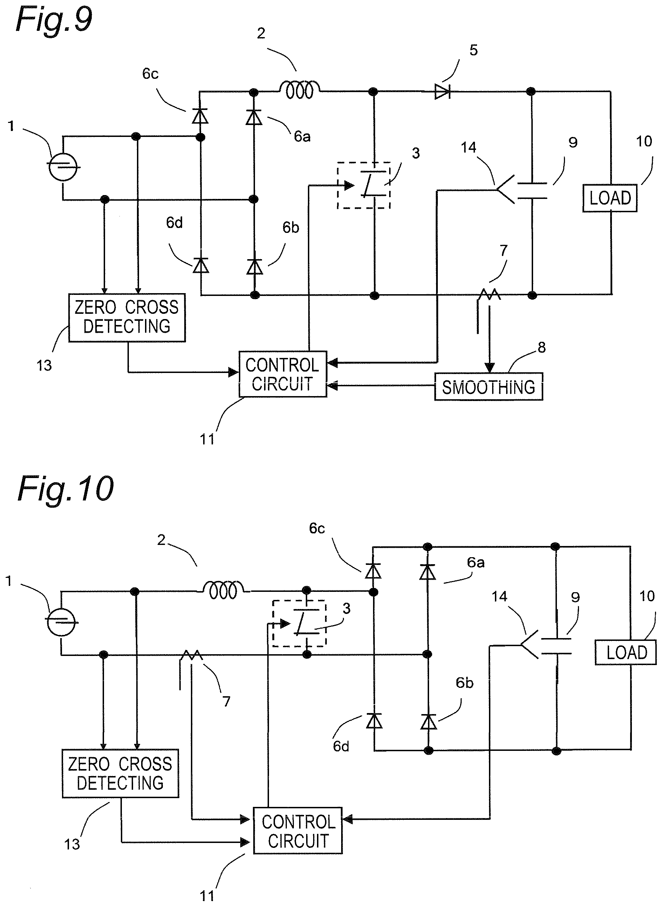

A rectifier circuit device of the second embodiment according to the present invention will be described with reference to Fig. 9. Fig. 9 is a circuit block diagram of the rectifier circuit device of the second embodiment depicting the case where the rectifier circuit device is implemented using a circuit configuration that is further different from those in the above embodiments. The basic circuit configuration is same as that described in Patent Literature 2. According to the configuration, the AC power source 1 is rectified by the diodes 6a, 6b, 6c, and 6d, thereafter, is short-circuited by the semiconductor switch 3 through the reactor 2, and the energy accumulated in the reactor 2 is sent to the smoothing capacitor 9 through a diode 5. In this configuration, because the semiconductor switch 3 is also one, similarly to the second example, the zero cross information by the zero cross detecting circuit 13 only has to be used. The control method used by the control circuit 11 is same as that of the first example and will not again be described.

A rectifier circuit device of the third embodiment according to the present invention will be described. The rectifier circuit device of the third embodiment does not include the current detecting circuit 7 and the smoothing circuit 8 and uses the information by the DC voltage detecting circuit 14. Thereby, the control same as that of the second embodiment can be realized. The control method used by the control circuit 11 is same as that of the first embodiment and will not again be described.

A rectifier circuit device of the fourth embodiment according to the present invention will be described with reference to Fig. 10. Fig. 10 is a circuit block diagram of the case where the current detecting circuit 7 in the configuration of the fourth embodiment depicted in Fig. 8 is moved to the AC input side and the smoothing circuit 8 is omitted. The control method used by the control circuit 11 is same as that of the second example and will not again be described.

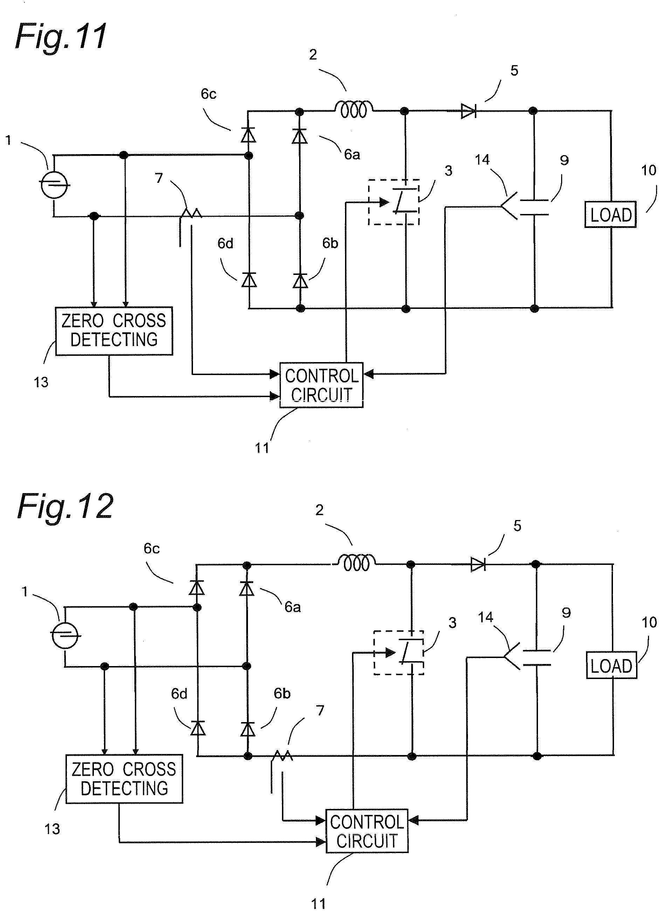

A rectifier circuit device of the fifth embodiment according to the present invention will be described with reference to Fig. 11. Fig. 11 is a circuit block diagram of the case where the current detecting circuit 7 in the configuration of the second embodiment depicted in Fig. 9 is moved to the AC input side and the smoothing circuit 8 is omitted. The control method used by the control circuit 11 is same as that of the second example and will not again be described.

A rectifier circuit device of the sixth embodiment according to the present invention will be described with reference to Fig. 12. Fig. 12 is a circuit block diagram of the case where the current detecting circuit 7 in the second embodiment is moved in the halfway of the loop including the diodes 6a, 6b, 6c, and 6d, the reactor 2, and the semiconductor switch 3. With this configuration, the control same as that of the fifth embodiment can also be realized. The control method used by the control circuit 11 is same as that of the second example and will not again be described.

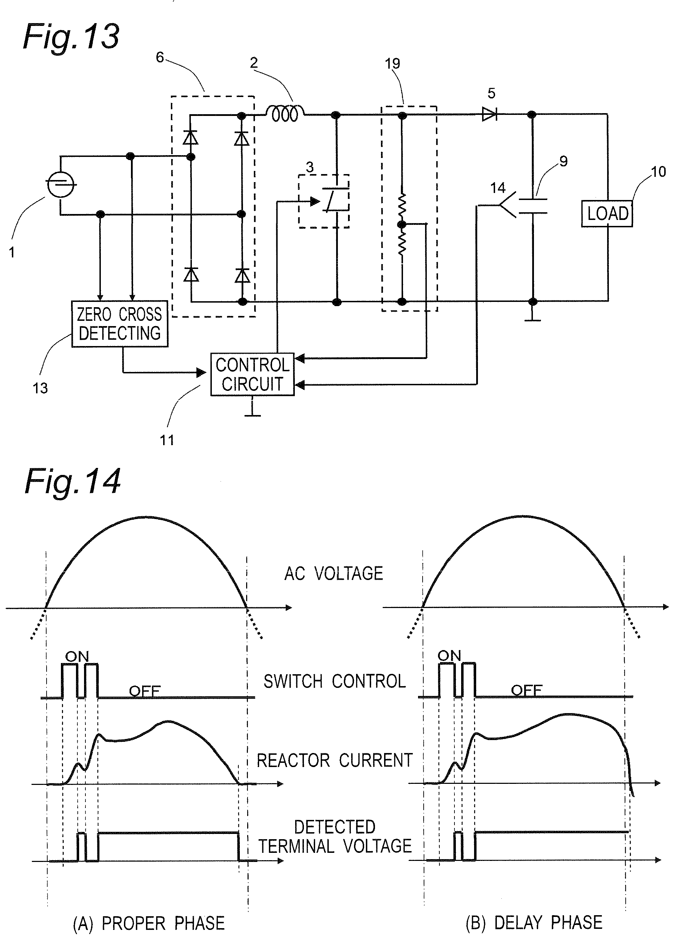

Fig. 13 is a circuit diagram of a rectifier circuit device of the seventh embodiment according to the present invention.

In Fig. 13, the output of the AC power source 1 is connected to the semiconductor switch 3 to be able to be short-circuited thereby through the rectifying diode bridge 6 and the reactor 2. The semiconductor switch 3 is controlled by the control circuit 11. The AC power source 1 detects using the zero cross detecting circuit 13 that the voltage of the AC power source 1 is zero, and the voltage is input into the control circuit 11. The output of the reactor 2 and the output of the other end of the rectifying diode bridge 6 are connected to the smoothing capacitor 9 and the load 10 through the diode 5. The output of the reactor 2 is also connected to the voltage detecting circuit 19 to be connected for the terminal voltage information of the reactor 2 to be input into the control circuit 11. Similarly, voltage information on both ends of the smoothing capacitor 9 is also input into the control circuit 11 by the DC voltage detecting circuit 14.

In the circuit configuration depicted in Fig. 13, the short-circuiting of the semiconductor switch 3 enables a current to flow through the reactor 2 also in the time period for the absolute value of the voltage of the AC power source 1 to be low. When the semiconductor switch 3 is opened, the current flowing through the reactor 2 charges the smoothing capacitor 9 through the diode 5. Thereby, the harmonics in the current flowing from the AC power source 1 can be reduced.

The short-circuiting and opening pattern of the semiconductor switch 3 is set such that, when the absolute value of the instantaneous voltage in each phase of the AC power source 1 tends to be increased, the ratio "D" of the short-circuiting time period tends to be reduced and, when the absolute value of the instantaneous voltage tends to be reduced, the ratio "D" of the short-circuiting time period tends to be increased.

Thereby, when the ratio "D" of the short-circuiting time period is great, the increase of the current is larger as the absolute value of the instantaneous voltage becomes greater and, when the ratio "D" of the short-circuiting time period is great, the increased amount of the current is further increased. When the absolute value of the instantaneous voltage is increased, the increase of the input current is gradually reduced by reducing the ratio "D" of the short-circuiting time period and, when the absolute value of the instantaneous voltage is reduced, on the contrary, the input current is gradually reduced by increasing the ratio of the short-circuiting time period. With the rectifier circuit device of the seventh embodiment, a current waveform having few harmonics can be acquired without executing control instant by instant based on the current detected instant by instant.

Fig. 14 is waveform diagrams for explaining a circuit operation of the rectifier circuit device of the seventh embodiment depicted in Fig. 13. Waveform diagrams in (a) on the left in Fig. 14 depict waveforms of the parts acquired when the short-circuiting and the opening of the semiconductor switch 3 properly operate. The upmost row depicts the waveform of the instantaneous voltage of the AC power source 1 (the AC voltage) and a row thereunder depicts the pattern of the short-circuiting (=ON) and the opening (=OFF) of the semiconductor switch 3.

When the semiconductor switch 3 is driven according to this pattern, as to the current of the reactor 2 of the rectifier circuit device of the seventh embodiment depicted in Fig. 13, when the instantaneous voltage of the AC power source 1 returns to zero, the current of the reactor 2 also returns to zero as a waveform in the third row from above in (a) on the left in Fig. 14 (the reactor current). In this case, the voltage information detected by the voltage detecting circuit 19 becomes a waveform like the waveform of the detected terminal voltage depicted in the lowermost row in (a) on the left in Fig. 14. When the semiconductor switch 3 is turned "ON", the result of the voltage detecting circuit 19 is the "Low" level. When the semiconductor switch 3 is turned "OFF" and the current currently flows through the reactor 2, the diode 5 becomes conductive and the current flows therethrough. As a result, the voltage at the terminal of the reactor 2 is substantially equal to the voltage on the positive side of the smoothing capacitor 9. The result of the voltage detecting circuit 19 is the "High" level.

On the other hand, when the semiconductor switch 3 is turned "OFF" and the reactor 2 has no current flowing therethrough, the diode 5 also has no current flowing therethrough and is at a potential substantially equal to the potential of the other end of the output of the rectifying circuit, that is, the potential on the negative side of the smoothing capacitor 9 due to a resistor constituting the voltage detecting circuit 19. As a result, the voltage information of the voltage detecting circuit 19 is at the "low" level. When the current of the reactor 2 returns to zero in the case where the instantaneous voltage of the AC power source 1 returns to zero, the voltage information of the voltage detecting circuit 19 is at the "Low" level.

The waveforms in (b) on the right in Fig. 14 depict the case where the short-circuiting and the opening of the semiconductor switch 3 are delayed compared to its proper state. In this case, as depicted in the third row from above in (b) on the right in Fig. 14, the state occurs where the phase of the current of the reactor 2 is delayed and the current of the reactor 2 still flows therethrough when the instantaneous voltage of the AC power source 1 returns to zero. In this case, the voltage information (the detected terminal voltage) of the voltage detecting circuit 19 depicted in the lowermost row in (b) on the right in Fig. 14 finally stays at "High". Whether the current of the reactor 2 is zero can be detected without using any current sensor, etc. When the current of the reactor 2 is not zero, the short-circuiting and opening operation of the semiconductor switch 3 is delayed and this operation therefore only has to be put forward. Thereby, the rectifier circuit device of the seventh embodiment can match the phase of the current of the reactor 2 with the voltage phase of the AC power source 1, and a high power factor rectifier circuit device can be realized.

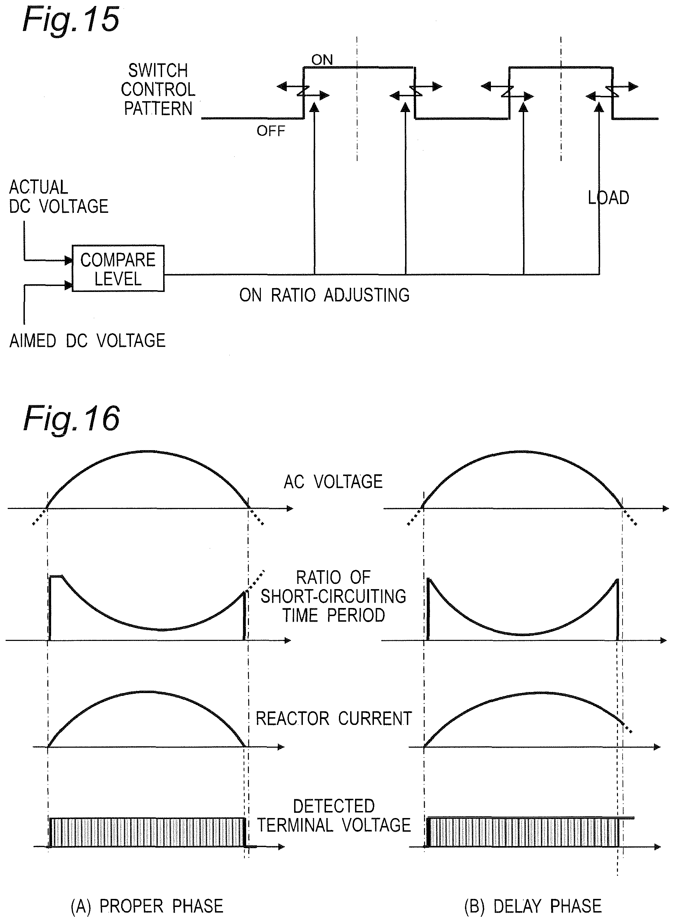

Fig. 15 is a waveform and block diagram of a method to control the DC voltage to be an aimed voltage.

Levels are compared between the actual DC voltage detected by the DC voltage detecting circuit 14 and a desired DC voltage value (the set DC voltage value), and the ratio of the short-circuiting in the switching control pattern (the ON ratio) is adjusted corresponding to the comparison result. When the short-circuiting time period is increased, the energy accumulated in the reactor 2 is increased and the energy flowing into the smoothing capacitor 9 during the opening is increased. The output voltage can therefore be increased. The DC voltage can be adjusted to be an aimed voltage using this principle.

The adjustment amount of the ratio "D" of the short-circuiting time period is set such that the adjustment amount of the ratio "D" of the short-circuiting time period is substantially increased when the absolute value of the instantaneous voltage tends to be increased, and the adjustment amount of the ratio "D" of the short-circuiting time period is substantially reduced when the absolute value of the instantaneous voltage tends to be reduced. When the harmonics are few and the power factor is high, the power source voltage waveform and the current waveform resemble each other. When the DC voltage is varied, the amplitude only has to be increased or reduced maintaining the waveform of the input current, and this is a time period for the ratio "D" of the short-circuiting time period to be small. The variation of the current is more significant in a phase time period for the absolute value of the instantaneous voltage to be higher. According to the rectifier circuit device of the seventh embodiment, therefore, the DC voltage can be adjusted using a current waveform including few harmonics and in only one type of short-circuiting and opening pattern of the semiconductor switch, without detecting the current instant by instant and executing control instant by instant, by increasing the adjustment amount in the time period for the absolute value of the instantaneous voltage of the AC power source 1 to be high.

When the current of the reactor 2 flows therethrough in the case where the instantaneous voltage of the AC power source 1 is zero, the power source power factor is significantly degraded. When the current of the reactor 2 is zero at a time point significantly earlier than the instant at which the instantaneous voltage of the AC power source 1 is zero, however, the power source power factor is also degraded. It is therefore optimal that the current of the reactor 2 is zero immediately before the voltage of the AC power source 1 is zero. For example, it is therefore desirable that the adjustment degrees of the process of putting forward the phase of the short-circuiting and opening pattern of the semiconductor switch 3 and the process of delaying the phase thereof are not set to be even, and the adjustment is executed such that the process of putting forward the phase is significantly varied based on the state of the output of the voltage detecting circuit 19 acquired when the instantaneous voltage of the AC power source 1 is zero. When the current of the reactor 2 is zero in the case where the instantaneous voltage of the AC power source 1 is zero, the rectifier circuit device can immediately get out of this state by configuring as above. Putting excessively forward the phase of the short-circuiting and opening pattern of the semiconductor switch 3 can also be prevented and a rectification operation can always be realized at a high power factor by configuring as above.

Diagrams in (a) on the left and (b) on the right in Fig. 16 are waveform diagrams of the control operations of a rectifier circuit device of the eighth embodiment according to the present invention. The waveform diagram in (a) on the left in Fig. 16 depicts the waveforms of the parts acquired when the short-circuiting and the opening of the semiconductor switch 3 properly operate. The waveforms in (b) on the right in Fig. 16 depict the case where the short-circuiting and the opening of the semiconductor switch 3 are delayed compared to those in the proper state. The circuit diagram of the rectifier circuit device of the eighth embodiment is same as that of the eleventh embodiment.

In the eighth embodiment, the semiconductor switch 3 is short-circuited or opened at a frequency sufficiently higher relative to the frequency of the AC power source 1 and, thereby, downsizing of the reactor 2 is realized. The ratio "D" of the short-circuiting time period at every instant is set as a pattern and the phase of this pattern is adjusted based on the presence or the absence of the current of the time when the instantaneous voltage of the AC power source 1 returns to zero.

The waveform in the second row from above in Fig. 16 depicts the ratio (the ON time period ratio) "D" of the short-circuiting time period. The output signal of the voltage detecting circuit 19 forms a waveform having "High" and "Low" frequently varying therein as depicted in the lowermost row of Fig. 16 (the detected terminal voltage).

In this case, similarly to the content of the description made in the seventh embodiment, whether the current of the reactor 2 is zero can similarly be detected by causing the semiconductor switch 3 not to be short-circuited at the instant at which the instantaneous voltage of the AC power source 1 is zero.

The condition for the present invention can be satisfied by setting the short-circuiting and the opening ratios, that is, the ratio "D" of the short-circuiting time period at the electric angle of "θ" as an example, as the switch control pattern for realization, employing a sine wave as the power source voltage waveform.
[Eq. 8]

$$\text{Short-circuiting and opening ratio} \quad D = 1 - A \times \sin(\theta - \beta) \quad (8)$$

In Eq. (8), "A" is a value that is adjusted based on the difference between the DC voltage and an aimed value, and "β" is a value that is adjusted based on whether any current flows through the reactor 2 when the instantaneous voltage of the AC power source 1 returns to zero. In Eq. (8), because the left member is a ratio, the value of the left member is set to be one when the value of the right member exceeds one and the value of the left member is set to be zero when the value of the right member is smaller than zero. In Eq. (8), the set pattern is always based on the sine wave pattern of the same basic equation. During the time period for the absolute value of the instantaneous voltage of the AC power source 1 to be low, the ratio "D" of the short-circuiting time period is relatively large and, as to the adjustment amount corresponding to the voltage difference, the adjustment amount is large during the time period for the absolute value of the instantaneous voltage of the AC power source to be high.

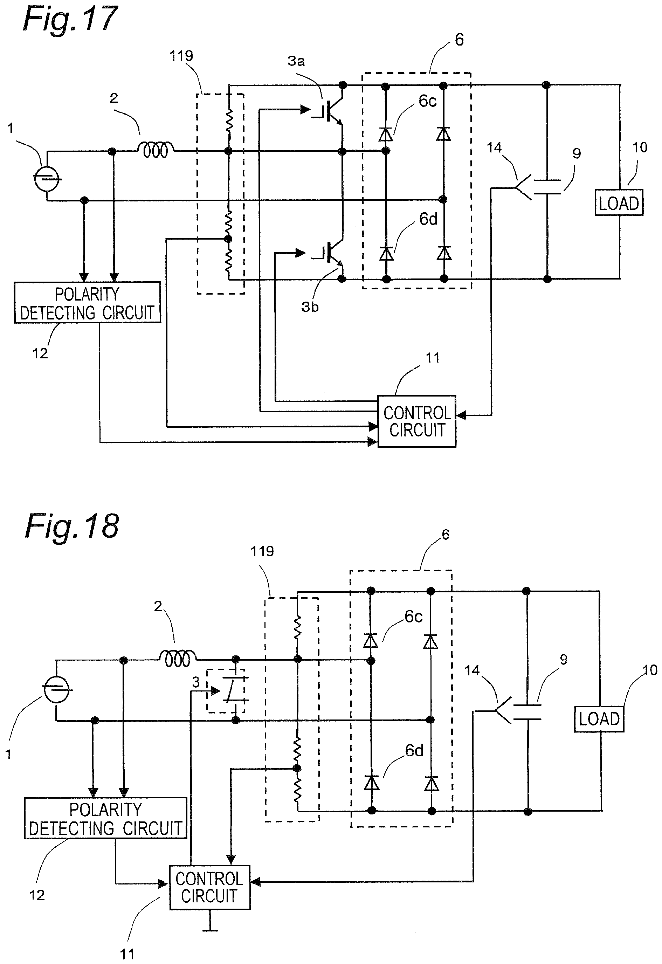

Fig. 17 is a circuit diagram of a rectifier circuit device of the ninth embodiment according to the present invention.

In Fig. 17, the AC power source 1 is directly connected to the reactor 2 and is connected to the two semiconductor switches 3a and 3b through the reactor 2. The load 10 is driven by a direct current which is smoothed by the smoothing capacitor 9 through the rectifying diode bridge 6 with the semiconductor switches 3a and 3b to be common in one phase. The polarity detecting circuit 12 detects the polarity of the instantaneous voltage of the AC power source 1 from the AC power source 1, and the control circuit 11 executes short-circuiting and opening control for either of the two semiconductor switches 3a and 3b corresponding to the detected polarity.

The circuit of the rectifier circuit device of the ninth embodiment depicted in Fig. 17 has the configuration that is known as the hybrid bridge type rectifying circuit. The control method except the switching between the semiconductor switches 3a and 3b to execute the short-circuiting and opening operation corresponding to the polarity of the instantaneous voltage of the AC power source 1, is same as the control method for an ordinary hybrid bridge type rectifying circuit. According to the output result of a voltage detecting circuit 29, because the logic is inversed due to the polarity of the instantaneous voltage of the AC power source 1, the result acquired when the current currently flows therethrough provides the determination logic which is inversed between the case where the instantaneous voltage of the AC power source 1 becomes zero from a positive voltage and the case where the instantaneous voltage becomes zero from a negative voltage. In the case where the polarity of the immediately previous AC voltage is positive, when the current currently flows through the reactor 2, the diode 6c is conductive and the level at the terminal of the reactor 2 is at the same level of the positive potential of the rectifying output, and the voltage detecting circuit 29 acquires the information on the "High" level. On the other hand, when the polarity of the immediately previous AC voltage is negative, the diode 6d is conductive and the level thereat is at the same level of the potential of the negative rectifying output, and the voltage detecting circuit 29 acquires the information on the "Low" level. When no current flows through the reactor 2, the diode 6c and the diode 6d are not conductive and the voltage detecting circuit 29 acquires information on the intermediate level. Execution is enabled only when the instantaneous voltage of the AC power source 1 becomes zero from a negative voltage using the voltage detecting circuit 19 used in Fig. 13 instead of the voltage detecting circuit 29 as another and an easier method.

Fig. 18 is a circuit diagram of a rectifier circuit device of the tenth embodiment according to the present invention.

In Fig. 18, the reactor 2 is directly connected to the AC power source 1 similarly to Fig. 17 also in the rectifier circuit device of the tenth embodiment. On the other hand, the semiconductor switch 3 is connected between the output of the reactor 2 and the other of the AC power source 1, and a circuit configuration is established to directly short-circuit the AC power source 1 to the reactor 2. The method of operating the short-circuiting and the opening of the semiconductor switch 3 is same as that in Fig. 13. On the other hand, the method of using the output information of the voltage detecting circuit 29 is same as that of Fig. 17.

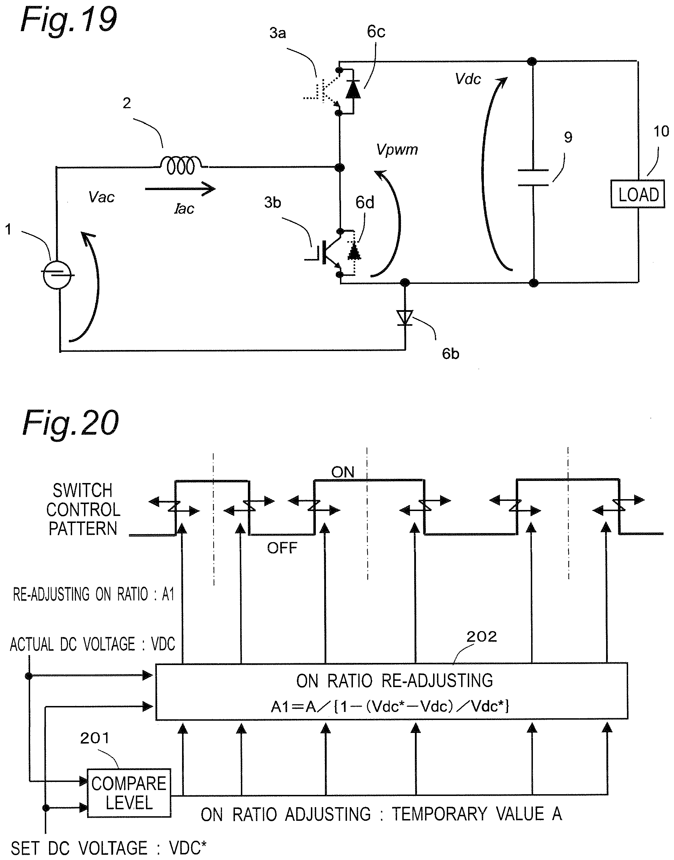

A rectifier circuit device of the eleventh embodiment according to the present invention will be described. The eleventh embodiment according to the present invention relates to the subject matter of claims 4 and 5, and the principle thereof will be described with reference to Fig. 19. Fig. 19 is based on the basic circuit configuration same as those of the circuit diagrams depicted in Figs. 1, 3, and 5, and depicts an operation executed during a time period within which the voltage of the output of the AC power source 1 is positive that is connected to the reactor 2.

In the state depicted in Fig. 19, of the two semiconductor switches 3a and 3b, the semiconductor switch 3a is completely turned off. In this case, the semiconductor switch 3b is short-circuited or opened. During the short-circuiting, a short-circuiting loop is formed by the AC power source 1, the reactor 2, the semiconductor switch 3b, and the diode 6b and the current is accumulated in the reactor 2. When the semiconductor switch 3b is opened, the current accumulated in the reactor 2 flows to the smoothing capacitor 9 and the load 10 due to the diode 6c and flows into the AC power source 1 through the diode 6b. In this operation, for the current "Iac" flowing through the reactor 2 to be a substantial sine wave, the voltages at both ends of the reactor 2 need to each be a substantial sine wave. Because the voltage "Vac" of the AC power source 1 is a sine wave, a voltage "Vpwm" at the other end needs to be a substantial sine wave. Assuming that the voltage losses of the semiconductor switches 3a and 3b, and the diodes 6b and 6c are each sufficiently small and are ignorable, it is considered that the value of "Vpwm" is the value of Eq. (9) below.

[Eq. 9]

$$Vpwm = Vdc \times (1-D) \quad (9)$$

and

[Eq. 10]

$$D=1-A\times\sin(\theta-\beta) \quad (10)$$

therefore,
[Eq. 11]

$$Vpmw=Vdc\times A\times\sin(\theta-\beta) \quad (11)$$

and, when "Vdc" is a constant value, "Vpmw" is a sine wave.

For example, as described with reference to Fig. 4, a DC voltage however includes a ripple voltage because the smoothing capacitor 9 has finite capacitance. When this state continues, "Vpwm" is not a sine wave.

To cope with this situation, using the instantaneous value "Vdc" of the DC voltage and the average value "Vdc(av)" of the DC voltage,
[Eq. 12]

$$Vpwm=Vdc\times A\times\sin(\theta-\beta)\div\{Vdc(av)\div Vdc\} \quad (12)$$

then,
[Eq. 13]

$$Vpwm=Vdc(av)\times A\times\sin(\theta-\beta) \quad (13)$$

is acquired and "Vpwm" is therefore a sine wave. For this calculation, the average value of the DC voltage is necessary and computation of this average value is necessary.

Considering the operation of feedback-controlling the DC voltage to be the desired value "Vdc*", the control itself has a property of a low-pass filter and the average value of the DC voltage therefore converges on a desired value of the DC voltage. The desired value therefore is usable instead of the average value.

Instead of the coefficient "A" in the computation equations used in some embodiments,
[Eq. 14]

$$A1=A/\{1-(Vdc^{*}-Vdc)/Vdc^{*}\}$$

$$=A\times Vdc^{*}\div Vdc \quad (14)$$

the value of "A1" presented in Eq. (14) above only has to be used.

Fig. 20 is a waveform diagram for explaining the flow of this processing. In Fig. 20, similarly to Fig. 7, a level comparing circuit 201 compares the actual DC voltage "Vdc" and the set DC voltage "Vdc*" with each other to adjust the ON ratio. The value acquired in this case is equal to that of Fig. 7 and is referred to as "A". For "A" acquired as above, an ON ratio re-adjusting circuit 202 executes the computation of Eq. (14) to re-adjust the ratio "D" of the short-circuiting time period (the ON ratio). The short-circuiting and the opening of the semiconductor switch are executed according to the result "A1" of the re-adjustment as the switch control pattern.

An assumption is established that the ripple voltage is low compared to the DC voltage.
[Eq. 15]

$$A2=A\times\{(Vdc^{*}-Vdc)/Vdc^{*}\}$$

$$=A\times\{1-Vdc/Vdc^{*}\} \quad (15)$$

High precision correction can therefore be executed even when "A2" expressed by Eq. 15 above is used, as a method of simplifying the computation process of the division executed instant by instant.

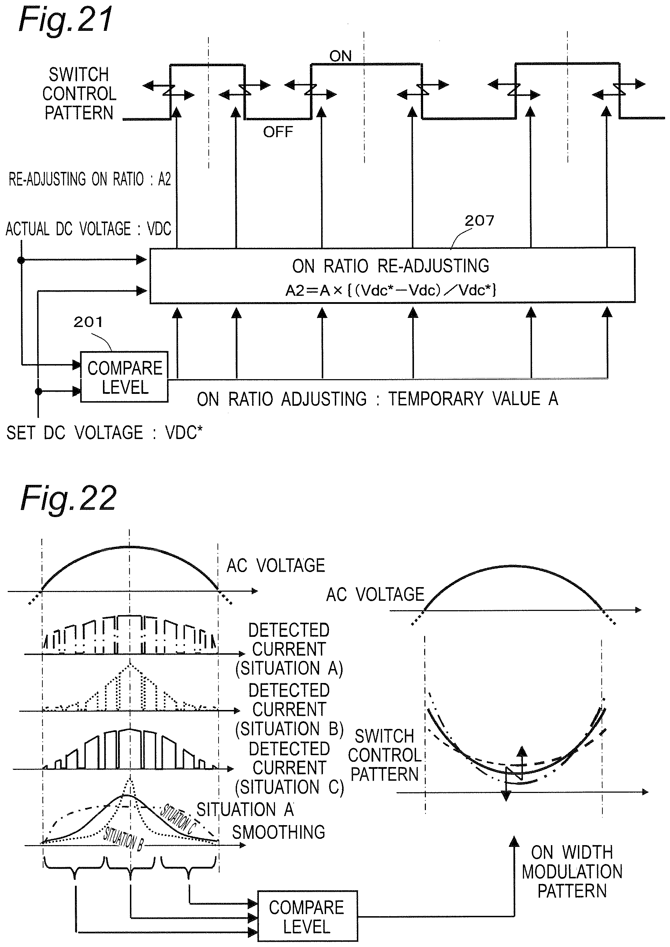

Fig. 21 is a waveform diagram for explaining the flow of this processing similarly to Fig. 20. Fig. 21 differs from Fig. 20 in that an ON ratio re-adjusting circuit 207 executes the computation of Eq. (15) to re-adjust the ratio (the ON ratio) D of the short-circuiting time period. The short-circuiting and the opening of the semiconductor switch are executed according to the result "A2" of the readjustment as the switch control pattern.

A rectifier circuit device of the twelfth embodiment according to the present invention will be described. In the rectifier circuit device of the twelfth embodiment, the basic portion constituting the control is same as that in Fig. 1 and its principle will be described with reference to Fig. 22. Similarly to Fig. 2, Fig. 22 depicts the variation of the waveforms detected by the current detecting circuit 7 that correspond to the situations. In Fig. 22, the upper row on the right depicts a waveform of the AC voltage (the AC voltage), and the patterns of the short-circuiting (=ON) and the opening (=OFF) (the switch control ON width patterns) are depicted thereunder.

In Fig. 22, the situation A (a dashed and dotted line waveform) of the detected current depicted in the second row on the left is the state where relatively large electric power is also supplied from a section having a low voltage of the AC power source 1. In contrast, the situation B (a dotted line waveform) of the detected current depicted in the third row on the left in Fig. 22 is the state where a large portion of the electric power is supplied from a section having a high voltage of the AC power source 1. The situation C (a solid line waveform) depicted in the fourth row on the left in Fig. 22 is the state where electric power corresponding to the sine wave waveform of the AC power source voltage is supplied. The situation C depicts the state where few harmonics are present. A waveform acquired by smoothing this current waveform is the waveform in the lowermost row on the left in Fig. 22 and represents a flowing-in electric power waveform. The situation A (the dashed and dotted line waveform) is a wide-width waveform. The situation B (the dotted line waveform) is a sharpened waveform. The situation C (the solid line waveform) is a proper waveform.

The rectifier circuit device of the twelfth embodiment divides the result of the smoothing of the current waveform into three sections in a power source half cycle, and executes level comparison for each thereof. The level of the first half or the second half is compared to the level of the middle portion. In the situation A, the level of the first half or the second half is high compared to that of the middle portion. In the situation B, the level of the first half or the second half is low compared to that of the middle portion. In the situation C, ratios are proper of the level of the first half or the second half and the level of the middle portion. For example, when the levels are checked at 45 degrees for the first half, at 90 degrees for the middle portion, and at 135 degrees for the second half as the representative points, the levels ideally are 1:2:1.

The switch control ON width pattern is modulated using this comparison result. The modulation is executed such that the modulation direction in the central portion and the modulation direction of the first half or the second half portion are opposite to each other as depicted by the waveform in the lower row on the right in Fig. 2. Thereby, any excessive sharpening and any excessively wide width of the electric power can be solved and the state where few harmonics are present can always be maintained without detecting fine variation of the current and the electric power.

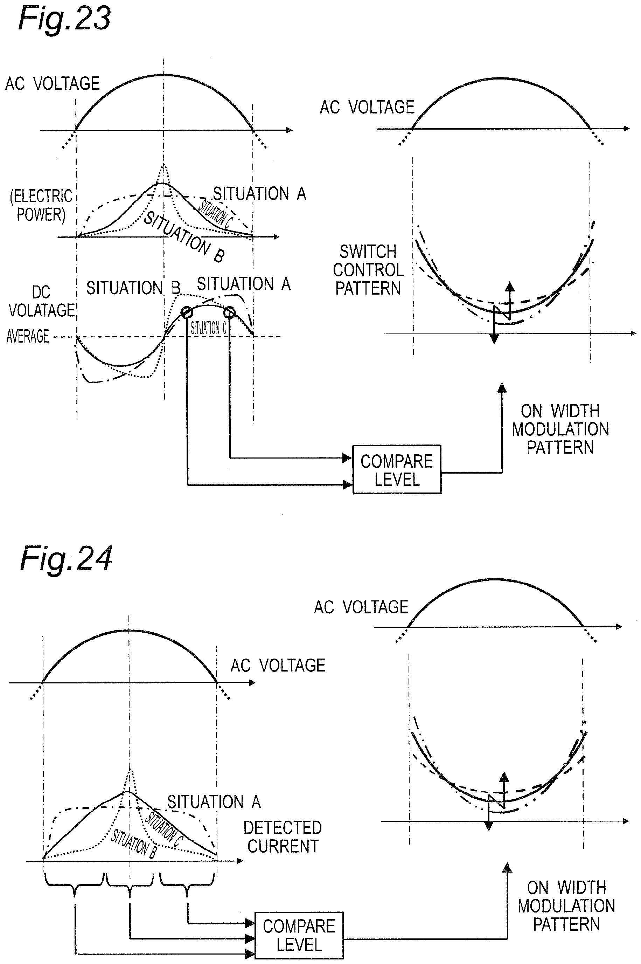

A rectifier circuit device of the thirteenth embodiment according to the present invention will be described. In the rectifier circuit device of the thirteenth embodiment, the basic portion constituting the control is same as that in Fig. 3 and its principle will be described with reference to Fig. 23. Similarly to Fig. 4, Fig. 23 depicts the variation of the input electric power waveform and the DC voltage waveform (for the power source half cycle) corresponding to the situation. In Fig. 23, the situation A (a dashed and dotted line waveform) is the state where relatively large electric current is also supplied from the section having a low voltage of the AC power source 1. In contrast, the situation B (a dotted line waveform) is the state where a large portion of the current is supplied from a section having a high voltage of the AC power source voltage. The situation C (a solid line waveform) is the state where the current corresponding to the sine wave waveform of the AC power source voltage is supplied. The situation C depicts the state where few harmonics are present. The situation A is a wide-width waveform. The situation B is a sharpened waveform. The situation C is a proper waveform.

The waveform in the lowermost row on the left in Fig. 23 depicts the DC voltage waveform (the DC voltage) at this time. In the situation A, the waveform mildly varies to increase in the vicinity of 90 degrees and rapidly varies in the vicinity of each of zero degree and 180 degree. In the situation B, the waveform rapidly varies to increase in the vicinity of 90 degrees and mildly varies in the vicinity of each of zero degree and 180 degrees. On the other hand, in the situation C, the variations in the vicinities of 90 degrees, zero degree, and 180 degrees are substantially the same variations. Noting the vicinity of 45 degrees and the vicinity of 135 degrees, in the situation A, the voltage at an angle closer to 90 degrees is closer to the average voltage and a voltage at an angle closer to zero degree or 180 degrees is more distant from the average voltage. In the situation B, the voltage at an angle closer to 0 degree or 180 degrees is closer to the average voltage and a voltage at an angle closer to 90 degrees is more distant from the average voltage. In the situation C, the degrees of distantness are equal.

As depicted in Fig. 23, whether the input voltage waveform is excessively sharpened or has an excessively wide width can be known by checking whether the DC voltages before and after 45 degrees or 135 degrees are at the same levels as depicted in Fig. 23. The ON width pattern of the switch control is modulated corresponding to the level difference. The modulation is executed such that the modulation direction of the central portion and the modulation direction of the first half or the second half portion are opposite to each other as depicted by the waveform in the lower row on the right in Fig. 23. Thereby, the rectifier circuit device of the seventeenth embodiment can solve the excessive sharpening and the excessively wide width of the electric power and can always maintain the state where few harmonics are present, without detecting fine variations of the current and the electric power.

A rectifier circuit device of the fourteenth embodiment according to the present invention will be described. In the rectifier circuit device of the fourteenth embodiment, the basic portion constituting the control is same as that in Fig. 5 and its principle will be described with reference to Fig. 24. Similarly to Fig. 6, Fig. 24 depicts the variation of the detected waveform (for the power source half cycle) of the current detecting circuit 7 corresponding to the situation.

In Fig. 24, the situation A (a dashed and dotted line waveform) is the state where relatively large current is also supplied from a section having a low voltage of the AC power source 1. In contrast, the situation B (a dotted line waveform) is the state where a large portion of the current is supplied from a section having a high voltage of the AC power source 1. The situation C (a solid line waveform) is the state where the current corresponding to the sine wave waveform of the AC power source voltage is supplied. The situation C depicts the state where few harmonics are present. The situation A is a wide-width waveform. The situation B is a sharpened waveform. The situation C is a proper waveform.

The rectifier circuit device of the fourteenth embodiment divides the result of the smoothing of the current waveform into three sections in a power source half cycle, and compares the levels thereamong. The level of the first half or the second half is compared to the level of the middle portion. In the situation A, the level of the first half or the second half is large compared to that of the middle portion. In the situation B, the level of the first half or the second half is small compared to that of the middle portion. In the situation C, ratios are proper of the level of the first half or the second half and the level of the middle portion. For example, when the levels are checked at 45 degrees for the first half, at 90 degrees for the middle portion, and at 135 degrees for the second half as the representative points, the levels ideally are 1:1.41 (=a square root of two): 1.

The switch control ON width pattern is modulated using this comparison result. The modulation is executed such that the modulation direction of the central portion and the modulation direction of the first half or the second half portion are opposite to each other as depicted by the waveform in the lower row on the right in Fig. 24. Thereby, the excessive sharpening and the excessively wide width of the current can be solved and the state where few harmonics are present can always be maintained without detecting fine variation of the current and the electric power.

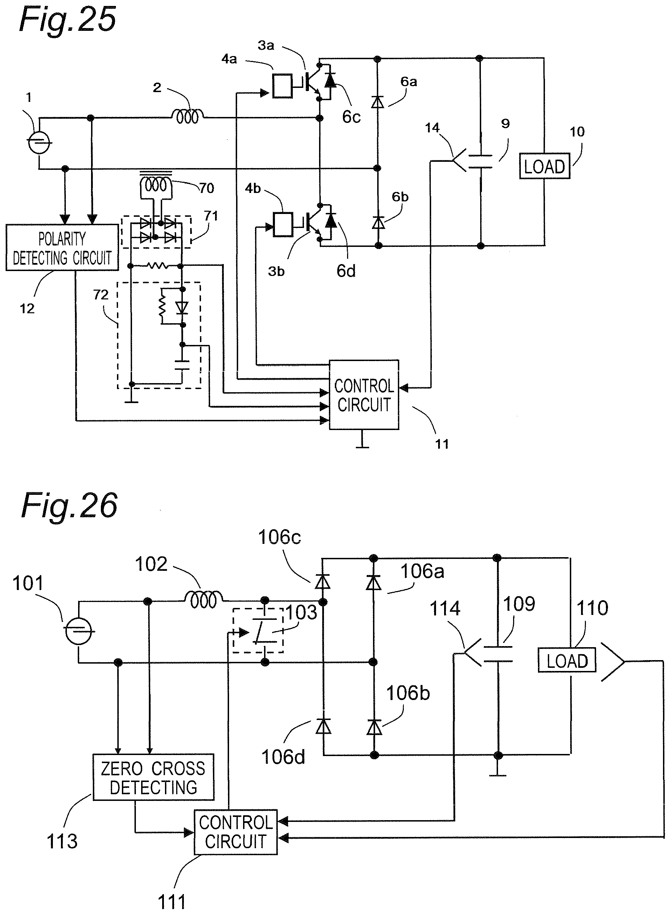

A rectifier circuit device of the fifteenth embodiment according to the present invention will be described. The circuit configuration of the rectifier circuit device of the fifteenth embodiment is depicted in Fig. 25. The circuit configuration of Fig. 25 is formed by replacing the current detecting circuit 7 in the circuit configuration of Fig. 5 with a current transformer 70, a full wave rectifying circuit 71, and a smoothing circuit 72. Though the current transformer 70 cannot detect the DC component, the current transformer 70 is characterized by its inexpensiveness compared to the current detecting circuit 7. Especially, for an air-conditioner, a heat pump apparatus, etc., the rectifier circuit device is used for the control for an efficient operation method and/or to avoid damaging the apparatus due to an operation with an excessive load, by inputting the pieces of information from the full wave rectifying circuit 71 and the smoothing circuit 72 into the control circuit 11, and causing the control circuit 11 to know the degree of the state of the load, using the circuit configuration using the full wave rectifying circuit 71 and the smoothing circuit 72 as depicted in Fig. 25.

As above, the output of the full wave rectifying circuit 71 is input into the control circuit 11 in the circuit configuration of the rectifier circuit device of the fifteenth embodiment. The waveform input into the control circuit 11 is a waveform acquired by repeating the detected current waveform depicted in Fig. 6. With the configuration of the rectifier circuit device of the fifteenth embodiment, however, problems arise that the DC component cannot be detected and that distortions generated by passing through the full wave rectifying circuit 71 are included. As depicted in Fig. 6, therefore, the information on the first half and that on the second half of the power source half cycle are averaged and used, and, thereby, the phase of the current can be substantially matched. Similarly, as depicted in Fig. 23, the information on the middle portion is also averaged and used, and, thereby, the harmonics in the input current can be reduced. Though, with the circuit configuration of the rectifier circuit device of the seventeenth embodiment, a problem arises that the distortions become significant when the current is small, the class A of IEC61000-3-2 of the power source harmonics regulations requires that the harmonic current must be equal to or lower than a specific amount within the operation range, and the circuit configuration does not depart from the harmonic regulations even when the distortions are increased in the case where the current is small. Utilizing this feature, a high power factor rectifier circuit device having few harmonics can be realized by using a simple current transformer.

The present invention has been described in a degree of detail in the embodiments. The content of the disclosure of the embodiments may however naturally be varied in the details of their configurations, and changes of any combination or any order of the elements in the embodiments can be realized without departing from the claimed scope. Though the expression "circuit" is used for each of the configurations herein, this expression includes an electric circuit and that constituted by software.

The rectifier circuit device of the present disclosure includes the control circuit that executes the short-circuiting and the opening of the semiconductor switch according to the pattern based on the phase of the AC voltage, and a means of detecting the electric power flowing into the DC side (including an electric circuit and/or software), and the control circuit is configured to adjust the phase of the short-circuiting and opening pattern of the semiconductor switch such that the amounts of information on the detected electric power in the first half and the second half of each half cycle of the AC power source are equal.

Thereby, the current becomes symmetrical and has the same phase as that of the power source voltage even when no precision is secured for the reactor inductance or even when the load significantly varies, and a high power factor rectifier circuit device can therefore be constructed.

According to the present invention, the DC voltage is detected and the ratio of the short-circuiting time period of the short-circuiting and opening pattern of the semiconductor switch is adjusted based on the difference between the detected voltage and a desired voltage. Thereby, according to the present invention, an arbitrary DC voltage can be output maintaining the high power factor.

According to the present invention, the ratio of the short-circuiting time period of the short-circuiting and opening pattern of the semiconductor switch is adjusted such that the electric power amount or the current amount of the middle portion is detected in addition to the amount of the first half or the amount of the second half of the electric power or the current flowing into the DC side and these amounts are each in a desired range or the state of the pulsing motion of the DC voltage becomes a predetermined state. Thereby, a rectifying circuit operation having a high power factor and few harmonics is realized.

The present disclosure solves the problem that the configuration of the control system is desired to be simplified using the simple rectifier circuit device and not by downsizing the reactor. The rectifier circuit device of the present disclosure is therefore configured to execute the short-circuiting and the opening of the semiconductor switch according to the pattern based on the phase of the AC voltage, have the means (including an electric circuit and/or software) of detecting the presence or the absence of the current of the reactor during the time period for the semiconductor switch to be turned off in the time period in the vicinity of the instant at which the instantaneous voltage of the AC power source is zero, and adjust the phase of the short-circuiting and opening pattern of the semiconductor switch relative to the phase of the AC power source voltage based on the result of the detection of the presence or the absence of the current of the reactor.

Thereby, for example, the semiconductor switch is opened during the time period in the vicinity of the instant at which the instantaneous voltage of the AC power source is zero, the reactor current during the opening time period is detected, and, when the reactor current is not zero, the pattern is corrected such that the pattern is put forward relatively to the phase of the AC voltage. According to the present invention, therefore, any accumulation of the current in the reactor is avoided and the phase of the current is same as the phase of the power source voltage even when no precision is secured for the reactor inductance or even when the load significantly varies, and a high power factor rectifier circuit device can therefore be established.

As above, according to the present invention, a rectifier circuit device can therefore be realized that can output an arbitrary DC voltage and that has a high power factor and few harmonics, even when no precision is secured for the reactor inductance or even when the load significantly varies, without especially using any high speed and high precision current detecting means.

According to the present invention, a rectifier circuit device can be realized that is capable of preventing any increase of harmonics together with the influence of a varying load due to the influence caused by the property of the turning on or off of the semiconductor switch and that has few power source harmonics of an arbitrary DC voltage output.

As above, the rectifier circuit device according to the present invention can realize a high power factor with few harmonics and can output an arbitrary DC voltage maintaining a high power factor even when no precision is secured for the reactor inductance or even when the load significantly varies, without using any high speed and high precision current detecting means. The rectifier circuit device according to the present invention is therefore widely usable for an apparatus that rectifies a single phase AC power source such as the one in a standard home into a direct current to drive a DC load or an apparatus that again converts the direct current acquired as above into an alternate current at an arbitrary frequency using an inverter circuit to drive an electric motor at a variable speed.

**Industrial Applicability**

The rectifier circuit device according to the present invention is widely applicable to an apparatus that rectifies a single phase AC power source such as the one in a standard home to produce a direct current to drive a direct current load or an apparatus that again converts the direct current acquired as above into an alternate current at an arbitrary frequency using an inverter circuit to drive an electric motor at a variable speed, such as, for example, an apparatus that constitutes a heat pump by compressing a coolant using a compressor and that executes air-conditioning such as cooling and heating, or refrigeration for food.

**Reference Signs List**

| | |
|---|---|
| 1 | AC power source |
| 2 | reactor |
| 3, 3a, 3b | semiconductor switch |
| 5, 6a, 6b, 6c, 6d | diode |
| 7 | current detecting circuit |
| 8 | smoothing circuit |
| 9 | smoothing capacitor |
| 10 | load |
| 11 | control circuit |
| 12 | polarity detecting circuit |
| 13 | zero cross detecting circuit |
| 14 | DC voltage detecting circuit |
| 19, 29 | voltage detecting circuit |
| 70 | current transformer |
| 71 | full wave rectifying circuit |
| 72 | smoothing circuit |

**Claims**

1. A rectifier circuit device having a function of improving a power source power factor by short-circuiting and opening an AC power source (1) through a reactor (2) using a semiconductor switch (3, 3a, 3b), the rectifier circuit device comprising:

   a control circuit (11) which is configured to execute the short-circuiting and the opening of the semiconductor switch (3, 3a, 3b) according to a pattern based on a phase of a voltage of the AC power source (1); and
   a DC voltage detecting circuit (14, 19, 29) configured to detect the voltage at the output of the rectifier circuit,
   **characterised in that**
   the control circuit (11) is configured to compare the level of the average DC voltage in at least an AC power source voltage half cycle and the level of the DC voltage at a time of an instantaneous voltage peak phase of the AC power source (1) voltage and to adjust the phase relation between the short-circuiting and opening pattern of the semiconductor switch (3, 3a, 3b) and the AC power source (1) voltage such that the average level of the DC voltage in at least an AC power source (1) voltage half cycle is substantially equal to the level of the DC voltage at a time of an instantaneous voltage peak phase of the AC power source voltage.

2. The rectifier circuit device of claim 1, wherein
   the DC voltage is detected, and wherein
   the ratio of the short-circuiting time period of the short-circuiting and opening pattern of the semiconductor switch (3, 3a, 3b) is adjusted such that the detected DC voltage approaches a desired DC voltage.

3. The rectifier circuit device of claim 1, wherein
   referring to an electric angle of the AC power source (1) as "θ", the ratio "D" of the short-circuiting time period of the short-circuiting and opening pattern of the semiconductor switch (3, 3a, 3b) in a vicinity of θ is substantially expressed in Eq. (2) below,

$$D = 1 - A \times \sin(\theta - \beta) \quad (2),$$

   wherein

   "β" in Eq. (2) is adjusted corresponding to a difference between the DC voltage at a time of an instantaneous voltage peak phase of the AC voltage and an average DC voltage of at least an AC power source (1) half cycle, and wherein

"A" in Eq. (2) is adjusted corresponding to a difference between the DC voltage and a desired DC voltage.

4.  The rectifier circuit device of claim 3, further comprising
    a circuit to detect a DC voltage instant by instant, and wherein
    the ratio is readjusted of the short-circuiting time period of the short-circuiting and opening pattern of the semiconductor switch (3, 3a, 3b) based on a deviation between a detected voltage of the DC voltage detected instant by instant and a desired value of a desired DC voltage.

5.  The rectifier circuit device of claim 4, wherein
    the rectifier circuit device is a rectifier circuit device for which, referring to an electric angle of the AC power source (1) as "$\theta$", the ratio "D" of the short-circuiting time period of the short-circuiting and opening pattern of the semiconductor switch (3, 3a, 3b) in a vicinity of "$\theta$" is substantially expressed in an equation below,

$$D=1-A\times\sin(\theta-\beta) \quad (4),$$

    and wherein

$$A1=A/\{1-(Vdc^*-Vdc)/Vdc^*\} \quad (5)$$

$$A2=A\times\{(Vdc^*-Vdc)/Vdc^*\} \quad (6)$$

    a value of "A1" in Eq. (5) above or "A2" in Eq. (6) above is used instead of "A" in Eq. (4).

6.  The rectifier circuit device of any one of claims 1, 2, 4 and 5, wherein
    the control circuit (11) adjusts the short-circuiting and opening pattern of the semiconductor switch (3, 3a, 3b) such that a DC voltage waveform of the first half or the second half in at least a half cycle section of the AC power source (1) is symmetrical.


**Patentansprüche**

1.  Gleichrichterschaltungsvorrichtung mit einer Funktion zum Verbessern des Leistungsfaktors einer Stromquelle durch Kurzschließen und Abschalten einer Wechselstromquelle (1) vermittels einer Drosselspule (2) unter Verwendung eines Halbleiterschalters (3, 3a, 3b), wobei die Gleichrichterschaltungsvorrichtung umfasst:

    eine Steuerschaltung (11), die dazu eingerichtet ist, das Kurzschließen und das Öffnen des Halbleiterschalters (3, 3a, 3b) nach einem Muster durchzuführen, das auf einer Phase einer Spannung der Wechselstromquelle (1) basiert; und
    eine Gleichspannungsdetektionsschaltung (14, 19, 29), die dazu eingerichtet ist, die Spannung am Ausgang der Gleichrichterschaltung zu detektieren,
    **dadurch gekennzeichnet, dass**
    die Steuerschaltung (11) dazu eingerichtet ist, den Pegel der mittleren Gleichspannung in mindestens einer Spannungshalbwelle der Wechselstromquelle und den Pegel der Gleichspannung zur Zeit einer momentanen Spannungsspitzenphase der Spannung der Wechselstromquelle (1) zu vergleichen und die Phasenbeziehung zwischen dem Muster zum Kurzschließen und Öffnen des Halbleiterschalters (3, 3a, 3b) und der Spannung der Wechselstromquelle (1) derart einzustellen, dass der mittlere Pegel der Gleichspannung in mindestens einer Spannungshalbwelle der Wechselstromquelle (1) im Wesentlichen gleich dem Pegel der Gleichspannung zur Zeit einer momentanen Spannungsspitzenphase der Spannung der Wechselstromquelle ist.

2.  Gleichrichterschaltungsvorrichtung nach Anspruch 1, wobei
    die Gleichspannung detektiert wird, und wobei
    das Verhältnis der Kurzschließzeitspanne des Musters zum Kurzschließen und Öffnen des Halbleiterschalters (3, 3a, 3b) derart eingestellt wird, dass sich die detektierte Gleichspannung an eine gewünschte Gleichspannung annähert.

**3.** Gleichrichterschaltungsvorrichtung nach Anspruch 1, wobei
bezugnehmend auf einen elektrischen Winkel der Wechselstromquelle (1) als "θ", das Verhältnis "D" der Kurzschließzeitspanne des Musters zum Kurzschließen und Öffnen des Halbleiterschalters (3, 3a, 3b) nahe θ im Wesentlichen mit der nachstehenden Gl. (2) ausgedrückt wird,

$$D=1-A\times\sin(\theta-\beta)\ (2),$$

wobei

"β" in Gl. (2) in Übereinstimmung mit einer Differenz zwischen der Gleichspannung zur Zeit einer momentanen Spannungspitzenphase der Wechselspannung und einer mittleren Gleichspannung von mindestens einer Halbwelle der Wechselstromquelle (1) eingestellt wird, und wobei
"A" in Gl. (2) in Übereinstimmung mit einer Differenz zwischen der Gleichspannung und einer gewünschten Gleichspannung eingestellt wird.

**4.** Gleichrichterschaltungsvorrichtung nach Anspruch 3, ferner umfassend
eine Schaltung zum kontinuierlichen Detektieren einer Gleichspannung, und wobei
das Verhältnis der Kurzschließzeitspanne des Musters zum Kurzschließen und Öffnen des Halbleiterschalters (3, 3a, 3b) auf der Grundlage einer Abweichung zwischen einer detektierten Spannung der kontinuierlich detektierten Gleichspannung und einem gewünschten Wert einer gewünschten Gleichspannung neu eingestellt wird.

**5.** Gleichrichterschaltungsvorrichtung nach Anspruch 4, wobei
die Gleichrichterschaltungsvorrichtung eine Gleichrichterschaltungsvorrichtung ist, bei der, bezugnehmend auf einen elektrischen Winkel der Wechselstromquelle (1) als "θ", das Verhältnis "D" der Kurzschließzeitspanne des Musters zum Kurzschließen und Öffnen des Halbleiterschalters (3, 3a, 3b) nahe "θ" im Wesentlichen mit einer nachstehenden Gleichung ausgedrückt wird,

$$D=1-A\times\sin(\theta-\beta)\ (4),$$

und wobei

$$A1=A/\{1-(Vdc^*-Vdc)/Vdc^*\}\ (5)$$

$$A2=A\times\{(Vdc^*-Vdc)/Vdc^*\}\ (6)$$

ein Wert von "A1" in der obigen Gl. (5) oder "A2" in der obigen Gl. (6) anstelle von "A" in Gl. (4) verwendet wird.

**6.** Gleichrichterschaltungsvorrichtung nach einem der Ansprüche 1, 2, 4 und 5, wobei
die Steuerschaltung (11) das Muster zum Kurzschließen und Öffnen des Halbleiterschalters (3, 3a, 3b) derart einstellt, dass eine Gleichspannungswellenform der ersten Hälfte oder der zweiten Hälfte in mindestens einem Halbwellenabschnitt der Wechselstromquelle (1) symmetrisch ist.

## Revendications

**1.** Dispositif de circuit redresseur ayant une fonction d'amélioration d'un facteur de puissance de source de puissance par court-circuitage et ouverture d'une source de puissance à courant alternatif (1) à travers un réacteur (2) en utilisant un commutateur à semi-conducteur (3, 3a, 3b), le dispositif de circuit redresseur comprenant :

un circuit de commande (11) qui est configuré pour exécuter le court-circuitage et l'ouverture du commutateur à semi-conducteur (3, 3a, 3b) selon un schéma basé sur une phase d'une tension de la source de puissance à courant alternatif (1) ; et
un circuit de détection de tension continue (14, 19, 29) configuré pour détecter la tension à la sortie du circuit redresseur,

**caractérisé en ce que**

le circuit de commande (11) est configuré pour comparer le niveau de la tension continue moyenne dans au moins un demi-cycle de tension de la source de puissance à courant alternatif et le niveau de la tension continue à un moment d'une phase de crête de tension instantanée de la tension de la source de puissance à courant alternatif (1) et pour ajuster la relation de phase entre le schéma de court-circuitage et d'ouverture du commutateur à semi-conducteur (3, 3a, 3b) et la tension de la source de puissance à courant alternatif (1) de sorte que le niveau moyen de la tension continue dans au moins un demi-cycle de tension de la source de puissance à courant alternatif (1) est sensiblement égal au niveau de la tension continue à un moment d'une phase de crête de tension instantanée de la tension de la source de puissance à courant alternatif.

2. Dispositif de circuit redresseur selon la revendication 1, dans lequel
la tension continue est détectée, et dans lequel
le rapport de la période de temps de court-circuitage du schéma de court-circuitage et d'ouverture du commutateur à semi-conducteur (3, 3a, 3b) est ajusté de sorte que la tension continue détectée se rapproche d'une tension continue souhaitée.

3. Dispositif de circuit redresseur selon la revendication 1, dans lequel
en faisant référence à un angle électrique de la source de puissance à courant alternatif (1) en tant que « θ », le rapport « D » de la période de temps de court-circuitage du schéma de court-circuitage et d'ouverture du commutateur à semi-conducteur (3, 3a, 3b) dans un voisinage de θ est sensiblement exprimé dans l'Éq. (2) ci-dessous,

$$D=1-A\times\sin(\theta-\beta) \quad (2),$$

dans lequel

« β » dans l'Éq. (2) est ajusté en correspondance à une différence entre la tension continue à un moment d'une phase de crête de tension instantanée de la tension alternative et une tension continue moyenne d'au moins un demi-cycle de la source de puissance à courant alternatif (1), et dans lequel
« A » dans l'Éq. (2) est ajusté en correspondance à une différence entre la tension continue et une tension continue souhaitée.

4. Dispositif de circuit redresseur selon la revendication 3, comprenant en outre
un circuit pour détecter une tension continue instant par instant, et dans lequel
le rapport est réajusté de la période de temps de court-circuitage du schéma de court-circuitage et d'ouverture du commutateur à semi-conducteur (3, 3a, 3b) sur la base d'une déviation entre une tension détectée de la tension continue détectée instant par instant et une valeur souhaitée d'une tension continue souhaitée.

5. Dispositif de circuit redresseur selon la revendication 4, dans lequel
le dispositif de circuit redresseur est un dispositif de circuit redresseur pour lequel, en faisant référence à un angle électrique de la source de puissance à courant alternatif (1) en tant que « θ », le rapport « D » de la période de temps de court-circuitage du schéma de court-circuitage et d'ouverture du commutateur à semi-conducteur (3, 3a, 3b) dans un voisinage de « θ » est sensiblement exprimé dans une équation ci-dessous,

$$D=1-A\times\sin(\theta-\beta) \quad (4),$$

et dans lequel

$$A1=A/\{1-(Vdc^*-Vdc)/Vdc^*\} \quad (5)$$

$$A2=A\times\{(Vdc^*-Vdc)/Vdc^*\} \quad (6)$$

une valeur de « A1 » dans l'Éq. (5) ci-dessus ou « A2 » dans l'Éq. (6) ci-dessus est utilisée au lieu de « A » dans l'Éq. (4).

6. Dispositif de circuit redresseur selon l'une quelconque des revendications 1, 2, 4 et 5, dans lequel le circuit de commande (11) ajuste le schéma de court-circuitage et d'ouverture du commutateur à semi-conducteur (3, 3a, 3b) de sorte qu'une forme d'onde de tension continue de la première moitié ou de la deuxième moitié dans au moins une section de demi-cycle de la source de puissance à courant alternatif (1) est symétrique.

## Fig.1

## Fig.2

# Fig.3

POLARITY DETECTING CIRCUIT

LOAD

CONTROL CIRCUIT

# Fig.4

AC VOLTAGE

SITUATION C

(ELECTRIC POWER)  SITUATION B  SITUATION A

DC VOLATAGE  SITUATION B

AVERAGE

SITUATION C  SITUATION A

COMPARE LEVEL

AC VOLTAGE

SWITCH CONTROL PATTERN

ON

OFF

PHASE MODULATION

*Fig.5*

*Fig.6*

# Fig.7

SWITCH
CONTROL
PATTERN

ON

OFF

ACTUAL
DC VOLTAGE

COMPARE
LEVEL

ON RATIO ADJUSTING

SET DC VOLTAGE

# Fig.8

6c

2

1

3

6a

6d

6b

14

9

10

LOAD

7

ZERO CROSS
DETECTING

13

CONTROL
CIRCUIT

11

8

SMOOTHING

26

## Fig.9

## Fig.10

Fig.11

Fig.12

EP 2 892 142 B1

## Fig.13

## Fig.14

AC VOLTAGE

SWITCH CONTROL

ON

OFF

REACTOR CURRENT

DETECTED
TERMINAL VOLTAGE

(A) PROPER PHASE

(B) DELAY PHASE

29

## Fig.15

SWITCH
CONTROL
PATTERN

ON

OFF

ACTUAL
DC VOLTAGE

COMPARE
LEVEL

AIMED DC VOLTAGE

ON RATIO ADJUSTING

LOAD

## Fig.16

AC VOLTAGE

RATIO OF
SHORT-CIRCUITING
TIME PERIOD

REACTOR CURRENT

DETECTED
TERMINAL VOLTAGE

(A) PROPER PHASE

(B) DELAY PHASE

*Fig.17*

*Fig.18*

## Fig.19

## Fig.20

## Fig.21

SWITCH
CONTROL
PATTERN

ON

OFF

RE-ADJUSTING ON RATIO : A2

ACTUAL DC VOLTAGE : VDC

207

ON RATIO RE-ADJUSTING

$$A2 = A \times \{(Vdc^* - Vdc) / Vdc^*\}$$

201

COMPARE
LEVEL

ON RATIO ADJUSTING : TEMPORARY VALUE A

SET DC VOLTAGE : VDC*

## Fig.22

AC VOLTAGE

AC VOLTAGE

DETECTED
CURRENT
(SITUATION A)

DETECTED
CURRENT
(SITUATION B)

DETECTED
CURRENT
(SITUATION C)

SWITCH
CONTROL
PATTERN

SITUATION A

SITUATION C

SITUATION B

SMOOTHING

COMPARE
LEVEL

ON WIDTH
MODULATION
PATTERN

## Fig.23

AC VOLTAGE

AC VOLTAGE

(ELECTRIC POWER)

SITUATION A

SITUATION C

SITUATION B

SWITCH CONTROL PATTERN

DC VOLATAGE

SITUATION B    SITUATION A

AVERAGE

SITUATION C

COMPARE LEVEL

ON WIDTH MODULATION PATTERN

## Fig.24

AC VOLTAGE

AC VOLTAGE

AC VOLTAGE

SITUATION A

SITUATION C

SITUATION B

DETECTED CURRENT

COMPARE LEVEL

ON WIDTH MODULATION PATTERN

## Fig.25

## Fig.26

## Fig.27

## Fig.28

*Fig.29*

**EP 2 892 142 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000217363 A
- JP 2007300762 A
- JP S63224698 A
- JP 2011200069 A
- JP 2002095243 A
- US 20110228573 A1
- JP 2011024394 A
- JP 2001145358 A